# EUROPEAN PATENT APPLICATION

(11) **EP 4 664 673 A1**
(43) Date of publication of application: **17.12.2025**
(21) Application number: 23923860.3
(22) Date of filing: 19.12.2023
(51) Int. Cl.: H01Q 1/00, H01Q 1/52

(54) **ANTENNA SYSTEM, BASE STATION AND FREQUENCY SELECTION ARCHITECTURE**

(30) Priority: 24.02.2023 CN 202310207005
(71) Applicant: Huawei Technologies Co., Ltd., Shenzhen, Guangdong 518129 (CN)
(72) Inventor: LI, Sucheng, Shenzhen, Guangdong 518129 (CN); GU, Yinghong, Shenzhen, Guangdong 518129 (CN); WANG, Jiang, Shenzhen, Guangdong 518129 (CN); LI, Jianping, Shenzhen, Guangdong 518129 (CN)
(74) Representative: Maiwald GmbH
(86) International application number: PCT/CN2023/139850
(87) International publication number: WO 2024/174697

(57) **Abstract**

This application relates to the field of communication technologies, and provides an antenna system, a base station, and a frequency selective architecture. The antenna system may include a frequency selective architecture, a first antenna array, and a second antenna array. The first antenna array operates on a first operating band, and the second antenna array operates on a second operating band. The first antenna array and the second antenna array are disposed opposite to each other in a third direction, and the frequency selective architecture is located between the first antenna array and the second antenna array. The frequency selective architecture includes a frequency selective structure and a shielding shell. The shielding shell is mounted on the frequency selective structure. The frequency selective architecture in the antenna system is appropriately designed, so that coupling between components in the antenna system can be reduced, and electromagnetic induction between the components in the antenna system can be reduced. This reduces induced currents on components such as a feed network and the frequency selective structure, and reduces design difficulty of the antenna system.

## Description

This application claims priority to Chinese Patent Application No. 202310207005.0, filed with the China National Intellectual Property Administration on February 24, 2023 and entitled "ANTENNA SYSTEM, BASE STATION, AND FREQUENCY SELECTIVE ARCHITECTURE", which is incorporated herein by reference in its entirety.

### TECHNICAL FIELD

This application relates to the field of communication technologies, and in particular, to an antenna system, a base station, and a frequency selective architecture.

### BACKGROUND

With rapid development of base station antenna technologies, a 5th-generation mobile communication technology (5th-generation, 5G) has been widely applied, and continuous progress is also made towards 5.5G and 6G technologies. However, while technologies are developed forward, modern communication imposes increasingly high requirements on a communication frequency band of a base station antenna, and an operator expects that a base station has more communication frequency bands. Therefore, during antenna system design, a plurality of antenna arrays of different operating bands need to be arranged in the base station antenna. However, it is difficult to design this antenna system.

### SUMMARY

To resolve the foregoing problems, this application provides an antenna system. The antenna system may include a frequency selective architecture, a first antenna array, and a second antenna array. The first antenna array operates on a first operating band, the second antenna array operates on a second operating band, and the first operating band is different from the second operating band. The first antenna array and the second antenna array are disposed opposite to each other in a third direction, and the frequency selective architecture is located between the first antenna array and the second antenna array. The frequency selective architecture includes a frequency selective structure and a shielding shell. The shielding shell is mounted on the frequency selective structure, and may be configured to accommodate a signal transmission network corresponding to the first antenna array and a signal transmission network corresponding to the second antenna array. The signal transmission network may be configured to feed power to the first antenna array and the second antenna array. It may be understood that the signal transmission network and the shielding shell may form a feed network. The signal transmission network may be at least one of a coaxial cable, a signal transmission line, a circuit board microstrip, and a phase shifter. The first antenna array is connected to the shielding shell in the frequency selective architecture. The frequency selective architecture may reflect an electromagnetic wave of the first operating band, and may transmit an electromagnetic wave of the second operating band.

In this application, an external shell (namely, the shielding shell) of the feed network is used as a part of the frequency selective architecture. The frequency selective architecture is appropriately designed, so that coupling between the feed network and another component in the antenna system can be reduced. For example, coupling between the feed network and the frequency selective structure is reduced. For another example, coupling between the feed network and the first antenna array and/or the second antenna array is reduced. Based on this, electromagnetic induction between the feed network and the another component in the antenna system can be reduced, and induced currents on components such as the feed network and the frequency selective structure are further reduced, so that performance of antenna elements in the first antenna array and the second antenna array is maintained. In conclusion, the foregoing technical solution can reduce design difficulty of the antenna system.

A first aspect of this application provides an antenna system, where the antenna system includes a frequency selective architecture, a first antenna array, and a second antenna array. The first antenna array corresponds to a first operating band. The second antenna array corresponds to a second operating band. The first operating band is different from the second operating band. The first antenna array and the second antenna array are disposed opposite to each other in a third direction. The frequency selective architecture is located between the first antenna array and the second antenna array, and is capable of reflecting an electromagnetic wave of the first operating band and transmitting an electromagnetic wave of the second operating band. The frequency selective architecture includes a frequency selective structure and at least one shielding shell, where the at least one shielding shell is mounted on the frequency selective structure and is connected to the first antenna array. The shielding shell may be used to arrange a signal transmission network.

In some possible implementations, the antenna system further includes a reflector plate, the reflector plate is located on a side that is of the second antenna array and that face away from the first antenna array, and the second antenna array is arranged on the reflector plate. In other words, the first antenna array, the second antenna array, and the reflector plate are disposed opposite to each other in the third direction.

The third direction may be a direction perpendicular to an array plane. The array plane is a plane on which antenna elements are distributed in arrays in the antenna system, and the plane is a plane parallel to a plane on which the reflector plate is located. A polarization direction of the antenna element is not specifically limited in this application. An incident direction of the electromagnetic wave intersects the array plane. The operating band may be understood as a frequency range in which the antenna array, in an operating state, can receive and radiate an electromagnetic wave. Mutual parallelism in this application is not absolute parallelism. Approximate parallelism caused by factors such as a machining error and an assembly error also falls within a range of the mutual parallelism in this application. Mutual perpendicularity in this application is not absolute perpendicularity. Approximate perpendicularity caused by factors such as a machining error and an assembly error also falls within a range of the mutual perpendicularity in this application. "Connection" may include two manners: "electrical connection" and "coupled connection".

In other words, in a possible implementation of this application, an accommodation cavity in the shielding shell may be used to arrange the signal transmission network, and the signal transmission network may implement a feeding function of the antenna system. The shielding shell and the frequency selective structure may form a feed network, and the frequency selective structure and the shielding shell may be combined to reflect the electromagnetic wave of the first operating band and transmit the electromagnetic wave of the second operating band.

In the foregoing antenna system, an external shell (namely, the shielding shell) of the feed network is used as a part of the frequency selective architecture. In other words, when a related parameter of the frequency selective structure is designed, the feed network is considered as an impact factor. Parameters of the frequency selective structure and parameters of the shielding shell are comprehensively considered, and the frequency selective architecture is appropriately designed, so that coupling between components including the frequency selective structure and the feed network in the antenna system can be reduced. For example, coupling between the feed network and the frequency selective structure is reduced. For another example, coupling between the feed network and the first antenna array and/or the second antenna array is reduced. Based on this, the antenna system can reduce electromagnetic induction between the feed network and another component in the antenna system, and further reduce induced currents on components such as the feed network and the frequency selective structure, so that performance of antenna elements in the first antenna array and the second antenna array is maintained. In conclusion, in the foregoing technical solution, decoupling difficulty in the antenna system is low, and electromagnetic interference is small, so that design difficulty of the antenna system can be reduced.

In some possible implementations, the frequency selective structure includes at least one frequency selective unit distributed in three-dimensional space, the at least one frequency selective unit encloses at least one mounting channel, and the shielding shell is located in the mounting channel. The mounting channel is reserved space that can be used to accommodate another element.

In the foregoing antenna system, the shielding shell is located in the mounting channel formed in the frequency selective structure, and the accommodation cavity of the shielding shell is configured to accommodate the signal transmission network, so that signal transmission network hiding can be implemented, and the shielding shell and the signal transmission network do not need to be arranged outside the frequency selective structure. This makes a structure of the frequency selective architecture compact, and improves space utilization of the antenna system.

In some possible implementations of the first aspect, the mounting channel may be a closed channel. In other words, frequency selective units are arranged around the mounting channel in an extension direction of the mounting channel. In some other alternative implementations, in the frequency selective structure in this application, the mounting channel may alternatively be a semi-open channel. In other words, frequency selective surfaces are arranged in a partial area around the mounting channel in an extension direction of the mounting channel. This is not specifically limited in this application.

In some possible implementations of the first aspect, the shielding shell is integrated on the frequency selective structure. For example, the frequency selective structure is a planar two-dimensional structure, and the shielding shell is mounted on one surface of the frequency selective structure. For another example, the frequency selective structure is a planar two-dimensional structure, and the shielding shell penetrates the frequency selective structure and is distributed on two opposite sides of the frequency selective structure.

In some possible implementations of the first aspect, the frequency selective structure may alternatively be integrated on the shielding shell. For example, the shielding shell is a metal shell, and the frequency selective structure is carved on a surface of the metal shell.

In some embodiments of this application, in the antenna system, the frequency selective structure is relatively fixed to the shielding shell. For example, the frequency selective structure is connected to the shielding shell. "Connection" is a mechanical connection relationship or a physical connection relationship. In the foregoing antenna system, the frequency selective structure and the shielding shell are integrated. In this way, a quantity of parts in the antenna system is reduced, assembly difficulty of the antenna system is reduced, and a refined and simplified design of the entire antenna system is implemented. In addition, an assembly error of the antenna system is reduced by reducing the quantity of parts in the antenna system, and precision of the antenna system is improved.

In some possible implementations, each frequency selective unit includes at least two planar patterns that are cross-connected to each other, and a connection manner of the at least two planar patterns include at least one of clamping, bonding, and welding. In the foregoing antenna system, there are various connection manners of the at least two planar patterns in the frequency selective unit, and a user may flexibly select a connection manner based on a requirement, to further reducing design difficulty of the antenna system.

In some possible implementations, at least a part of the frequency selective units in the frequency selective structure form a first mesh structure, and a mesh of the first mesh structure serves as the mounting channel. That at least the part of frequency selective units form the first mesh structure means that at least the part of frequency selective units are distributed in space corresponding to the first mesh structure. The part of frequency selective units is not specifically limited.

In the foregoing antenna system, the frequency selective structure includes the first mesh structure, and the shielding shell is located at the mesh of the first mesh structure. The structure of the frequency selective architecture is appropriate, and difficulty in assembling the frequency selective structure and the shielding shell is reduced.

In some possible implementations, the frequency selective unit in the first mesh structure is clamped to a surface of the shielding shell, so that a manner of assembling the frequency selective structure and the shielding shell in the frequency selective architecture is further simplified.

In some possible implementations, there are at least two mounting channels, the at least two mounting channels are successively arranged in parallel in a first direction, each mounting channel extends in a second direction, and the first direction, the second direction, and the third direction intersect each other. In other words, in a possible implementation of this application, the mounting channel is a strip structure extending in the second direction, and an extension direction of the mounting channel is parallel to the array plane.

In some possible implementations, the first direction, the second direction, and the third direction are perpendicular to each other.

In some possible implementations, the first mesh structure includes at least two groups of first frequency selective units that are distributed in parallel, each group of first frequency selective units are provided with mounting openings, and positions of the mounting openings on the at least two groups of first frequency selective units are opposite to each other, to jointly form the mounting channel.

In some possible implementations, the first mesh structure includes the at least two groups of first frequency selective units that are distributed in parallel and at least two groups of second frequency selective units, each group of first frequency selective units are provided with the mounting openings, the positions of the mounting openings on the at least two groups of first frequency selective units are opposite to each other, to jointly form the mounting channel, and each group of second frequency selective units are located between two adjacent shielding shells and are connected to the first frequency selective unit.

In some possible implementations, the first mesh structure includes at least a third frequency selective unit, and the third frequency selective unit includes a third pattern and a fourth pattern. The third pattern is parallel to the first direction and the second direction, and is connected to the shielding shell. The fourth pattern is distributed between two adjacent shielding shells and is connected to the third pattern.

In some possible implementations, at least a part of the frequency selective units in the frequency selective structure form a plurality of strip structures arranged in parallel in a first direction, each of the strip structures extends in a second direction, the mounting channel is formed between two adjacent strip structures, and the first direction, the second direction, and the third direction intersect each other.

In some possible implementations, the strip structure includes at least a fourth frequency selective unit, and the fourth frequency selective unit includes: a fifth pattern and a sixth pattern arranged in a cross manner on a first distribution plane, a seventh pattern and an eighth pattern arranged in a cross manner on a second distribution plane, and a connecting piece whose extension direction is parallel to the third direction. The first distribution plane is perpendicular to the third direction, and the second distribution plane is parallel to the first distribution plane. One end of the connecting piece is connected to an intersection position of the fifth pattern and the sixth pattern, and the other end is connected to an intersection position of the seventh pattern and the eighth pattern. In the foregoing antenna system, periods of composition units in the frequency selective structure in the frequency selective architecture are distributed in a topology direction, that is, are distributed in arrays periodically, so that performance of the antenna system is further optimized.

In some possible implementations, at least a part of the frequency selective units in the frequency selective structure form a block structure, the shielding shell includes a second mesh structure, a mesh of the second mesh structure penetrates in the third direction, and the block structure is distributed in the mesh of the second mesh structure.

In some possible implementations, the block structure includes at least a fifth frequency selective unit, and the fifth frequency selective unit includes a ninth pattern and a tenth pattern. The tenth pattern and the ninth pattern are non-coplanar and arranged in a cross manner, and a cross line of the ninth pattern and the tenth pattern is parallel to an extension direction of the mounting channel.

In some possible implementations of the first aspect, the frequency selective structure is connected to the shielding shell. For example, the fifth frequency selective unit is connected to a mesh surface of the mesh. The shielding shell includes a primary shell and a secondary shell, where the secondary shell is connected to the primary shell. Two sides of the ninth pattern extending along the cross line are respectively connected to two adjacent primary shells, and/or two sides of the tenth pattern extending along the cross line are respectively connected to two adjacent secondary shells between the two adjacent primary shells.

In some possible implementations of the first aspect, the frequency selective structure is not connected to the shielding shell. For example, the fifth frequency selective unit is suspended in the mesh. For another example, the fifth frequency selective unit is mounted in the mesh in the shielding shell by using an intermediate component.

In some possible implementations, the block structure includes at least a sixth frequency selective unit, and the sixth frequency selective unit includes an eleventh pattern and a twelfth pattern. The eleventh pattern is arranged perpendicular to the third direction. The twelfth pattern and the eleventh pattern are disposed opposite to each other. The twelfth pattern may be disposed opposite to the eleventh pattern in the third direction.

In some possible implementations, the shielding shell includes a first shell and a second shell, and the first shell and the second shell are fastened to each other in the third direction, to jointly form an accommodation cavity of the shielding shell. In the foregoing antenna system, in the frequency selective architecture, the shielding shell is designed as the first shell and the second shell that are fastened to each other in the third direction, to facilitate assembly of the signal transmission network in the shielding shell, reduce production costs and use costs of the antenna system, and improve overall economic benefits.

In some possible implementations, the first antenna array includes a first sub antenna array and a second sub antenna array. The first sub antenna array corresponds to a first operating sub-band, and the first operating sub-band is in the first operating band. The second sub antenna array corresponds to a second operating sub-band, the second operating sub-band is in the first operating band, and the second operating sub-band is different from the first operating sub-band.

The foregoing antenna system may be compatible with first antenna arrays of a plurality of frequency bands, so that operating bands of the antenna system are further increased and performance of the antenna system is further improved.

In some possible implementations, the first sub antenna array includes a plurality of first antenna elements, distances between two adjacent first antenna elements are the same, and the distance is positively correlated with a wavelength of an electromagnetic wave corresponding to the first operating sub-band. Because the first sub antenna array corresponds to an electromagnetic wave in an operating band, that is, the first sub antenna array corresponds to an electromagnetic wave in a frequency band range, a half wavelength is actually a value range. In other words, a distance between two adjacent first antenna elements in each group of first sub antenna arrays may be a value within a corresponding value range. The distance between two adjacent first antenna elements in the first sub antenna array may be a half wavelength of a center frequency of the operating band corresponding to the first sub antenna array. It may be understood that, in this application, the first sub antenna array is arranged on the shielding shell. Therefore, the distance between two adjacent first antenna elements further needs to be appropriately adjusted based on a position and a size of the shielding shell. In addition, in this application, the first antenna array may include a plurality of groups of first antenna arrays. Therefore, a distance between two adjacent antenna elements in each group of first antenna arrays further need to be comprehensively adjusted with reference to a layout manner of the plurality of groups of first antenna arrays.

In some possible implementations, the distance between two adjacent first antenna elements is a half wavelength of the electromagnetic wave corresponding to the first operating sub-band.

In some possible implementations, the distance between two adjacent first antenna elements is any one of a one-eighth wavelength, a quarter wavelength, or a wavelength of the electromagnetic wave corresponding to the first operating sub-band. This is not specifically limited in this application.

In some possible implementations, each shielding shell includes at least two first division cavities, and the at least two second division cavities are arranged in the third direction, and/or each shielding shell includes at least two second division cavities, and the at least two second division cavities are arranged in a vertical direction of the third direction. In the foregoing antenna system, each shielding shell may be disposed in a division cavity, so that a signal transmission network can be separately arranged in a different manner, to improve performance of the antenna system.

In some possible implementations, there are at least two shielding shells, and the first antenna array is arranged on at least one of the at least two shielding shells.

In the foregoing antenna system, the first antenna array is arranged on some shielding shells, and no first antenna array is arranged on the remaining shielding shells. In this way, it is convenient to directly supplement a new antenna array to the antenna system subsequently, to more flexibly extend an operating band corresponding to the antenna system based on changing requirements, prolong a use period of the antenna system, and reduce use costs of the antenna system. In addition, a signal transmission network in a shielding shell without an antenna array may be cascaded to a signal transmission network in another shielding shell, to further improve performance of the antenna system.

In some possible implementations, the frequency selective structure is connected to the shielding shell, and a connection manner between the frequency selective structure and the shielding shell includes at least one of clamping, bonding, and welding.

In some possible implementations of the first aspect, the frequency selective structure is not connected to the shielding shell. Because the frequency selective structure is not connected to the shielding shell, an impact factor in a design process of the frequency selective structure is reduced, design difficulty of the antenna system is reduced, and a debugging period of the antenna system is shortened.

In some possible implementations of the first aspect, the frequency selective structure is connected to the shielding shell. In the foregoing antenna system, the frequency selective structure is connected to the shielding shell, so that a connection manner between the frequency selective structure and the shielding shell is simplified, and assembly difficulty of the antenna system is reduced.

In some possible implementations, the antenna system further includes a physical line, and the first antenna array and the shielding shell are connected through the physical line.

In some possible implementations, the physical line includes at least one of a coaxial cable, a signal transmission line, and a printed circuit board microstrip.

In some possible implementations, the antenna system further includes a signal transmission network. The signal transmission network is located in the shielding shell, and is connected to the first antenna array and/or connected to the second antenna array. The signal transmission network is configured to feed power to the first antenna array and/or the second antenna array.

In some possible implementations, the signal transmission network is distributed in at least a part of the accommodation cavity in the shielding shell.

In some possible implementations, the signal transmission network includes a coaxial cable and/or a phase shifter.

In some possible implementations, the signal transmission network includes components that can extend performance, such as a phase shifter, a filter, and a combiner.

In some possible implementations, there are at least two shielding shells, and the signal transmission network is arranged in at least one of the at least two shielding shells.

A second aspect of this application provides an antenna system, where the antenna system includes a first antenna array and a frequency selective architecture. The first antenna array corresponds to a first operating band. The frequency selective architecture is capable of reflecting an electromagnetic wave of the first operating band and transmitting an electromagnetic wave of a second operating band, the second operating band is different from the first operating band, the frequency selective architecture includes a frequency selective structure and a shielding shell, and the shielding shell is mounted on the frequency selective structure and is connected to the first antenna array.

It may be understood that, for an effect of the antenna system in the second aspect, a possible implementation, and an effect brought by the possible implementation, specifically refer to the antenna system in the first aspect. Details are not described herein again.

The second aspect of this application provides another antenna system, where the antenna system includes a second antenna array and a frequency selective architecture. The second antenna array corresponds to a second operating band. The frequency selective architecture is capable of reflecting an electromagnetic wave of a first operating band and transmitting an electromagnetic wave of the second operating band, the second operating band is different from the first operating band, the frequency selective architecture includes a frequency selective structure and a shielding shell, and the shielding shell is mounted on the frequency selective structure and is used to be connected to the first antenna array.

It may be understood that, for an effect of the antenna system in the second aspect, a possible implementation, and an effect brought by the possible implementation, specifically refer to the antenna system in the first aspect. Details are not described herein again.

A third aspect of this application provides a base station, where the base station includes the antenna system and the radio frequency module according to any one of the first aspect and the implementations of the first aspect, and the second aspect and the implementations of the second aspect, and the antenna system is connected to the radio frequency module.

It may be understood that, for an effect of the base station in the third aspect, a possible implementation, and an effect brought by the possible implementation, specifically refer to the antenna system in the first aspect. Details are not described herein again.

A fourth aspect of this application provides a frequency selective architecture, where the frequency selective architecture is capable of reflecting an electromagnetic wave of a first operating band and transmitting an electromagnetic wave of a second operating band, the first operating band is different from the second operating band, the frequency selective architecture includes a frequency selective structure and a shielding shell, and the shielding shell is mounted on the frequency selective structure.

It may be understood that, for an effect of the frequency selective architecture in the fourth aspect, a possible implementation, and an effect brought by the possible implementation, specifically refer to the antenna system in the first aspect. Details are not described herein again.

### BRIEF DESCRIPTION OF DRAWINGS

To describe the technical solutions in embodiments of this application or in the background more clearly, the following briefly describes the accompanying drawings for describing embodiments of this application or the background.
FIG. 1(a) is a diagram of some antenna systems 1';
FIG. 1(b) is a diagram of some antenna systems 1";
FIG. 1(c) is a diagram of some other antenna systems 1";
FIG. 1(d) is a diagram of some still other antenna systems 1";
FIG. 1(e) is a diagram of some antenna radomes 1"' for antenna shielding devices;
FIG. 2 is a diagram of an antenna system 1 according to some embodiments of this application;
FIG. 3 is a diagram of an antenna system 1 according to some embodiments of this application;
FIG. 4 is a diagram of an antenna system 1 according to some embodiments of this application;
FIG. 5 is a diagram of a frequency selective structure 100 according to some embodiments of this application;
FIG. 6 is a front view of a frequency selective architecture 10 according to some embodiments of this application;
FIG. 7(a) is a top view of a frequency selective architecture 10 according to some embodiments of this application;
FIG. 7(b) is a cross-sectional view of a frequency selective architecture 10 along a section A-A in FIG. 6 according to some embodiments of this application;
FIG. 8 is a diagram of a frequency selective structure 100 according to some other embodiments of this application;
FIG. 9 is a top view of a frequency selective architecture 10 according to some embodiments of this application;
FIG. 10 is a top view of a frequency selective architecture 10 according to some other embodiments of this application;
FIG. 11(a) is a diagram of a structure of an antenna system 1 in some embodiments applicable to an application scenario 1;
FIG. 11(b) is a partial enlargement view of an area S₁ in FIG. 11(a);
FIG. 12 shows an electromagnetic filtering response characteristic curve of a frequency selective architecture 10 in the antenna system 1 corresponding to FIG. 11(a) and FIG. 11(b) according to some embodiments of this application;
FIG. 13(a) is a diagram of a structure of a frequency selective architecture 10 in some other embodiments applicable to an application scenario 1;
FIG. 13(b) is an enlargement view of one unit of the frequency selective architecture 10 in FIG. 13(a);
FIG. 14(a) is a diagram of a structure of a frequency selective architecture 10 in some embodiments applicable to an application scenario 2;
FIG. 14(b) is an enlargement view of one unit of the frequency selective architecture 10 in FIG. 14(a);
FIG. 15(a) is a diagram of a structure of a frequency selective architecture 10 in some embodiments applicable to an application scenario 3;
FIG. 15(b) is an enlargement view of one unit of the frequency selective architecture 10 in FIG. 15(a);
FIG. 16(a) is a diagram of a structure of a frequency selective architecture 10 in some other embodiments applicable to an application scenario 3;
FIG. 16(b) is an enlargement view of one unit of the frequency selective architecture 10 in FIG. 16(a);
FIG. 17(a) is a diagram of an antenna system 1 according to some embodiments of this application;
FIG. 17(b) is a diagram of an antenna system 1 according to some other embodiments of this application;
FIG. 18(a) is a diagram of an antenna system 1 according to some embodiments of this application;
FIG. 18(b) is a partial enlargement view of an area S₂ in FIG. 18(a);
FIG. 19 is a diagram of an antenna system 1 according to some embodiments of this application;
FIG. 20 is a diagram of an antenna system 1 according to some embodiments of this application;
FIG. 21 is a diagram of an antenna system 1 according to some embodiments of this application;
FIG. 22 is a diagram of an antenna system 2 according to some embodiments of this application; and
FIG. 23 is a diagram of an antenna system 3 according to some embodiments of this application.

Reference numerals: 1': antenna system; 10': first antenna array; 20': second antenna array; 30': reflector plate; 40': first feed network; 50': second feed network; 60': frequency selective surface; 1: antenna system; 2: antenna system; 3: antenna system; 10: frequency selective architecture; 100: frequency selective structure; 101: mounting channel; 1011: primary channel; 1012: secondary channel; 101a: mounting channel; 101b: mounting channel; 101c: mounting channel; 101d: mounting channel; 101e: mounting channel; 110: first frequency selective unit; 111: first pattern; 112: second pattern; 120: second frequency selective unit; 130: third frequency selective unit; 131: third pattern; 132: fourth pattern; 140: fourth frequency selective unit; 141: fifth pattern; 142: sixth pattern; 143: seventh pattern; 144: eighth pattern; 135: connecting piece; 150: fifth frequency selective unit; 151: ninth pattern; 152: tenth pattern; 160: sixth frequency selective unit; 161: eleventh pattern; 162: twelfth pattern; 200: shielding shell; 201: mesh; 210: primary shell; 220: secondary shell; 200a: shielding shell; 200b: shielding shell; 200c: shielding shell; 200d: shielding shell; 200e: shielding shell; 200m: first shell; 200n: second shell; 20: first antenna array; 20a: first antenna array; 20b: first antenna array; 20c: first antenna array; 20d: first antenna array; 20e: first antenna array; 20-1: first sub antenna array; 20-2: second sub antenna array; 20-3: third sub antenna array; 30: second antenna array; 40: reflector plate; 50: physical line; and 60: signal transmission network.

### DESCRIPTION OF EMBODIMENTS

To make the objectives, technical solutions, and advantages of this application clearer, the following further describes the implementations of this application in detail with reference to the accompanying drawings.

The technical solutions in embodiments of this application may be applied to the following communication systems that include but are not limited to: a long term evolution (Long Term Evolution, LTE) system, a frequency division duplex (Frequency Division Duplex, FDD) system, a time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th-generation, 5G) system, a 5.5th generation (5.5th-generation, 5.5G) system, a 6th generation (6th-generation, 6G) system or a new radio (New Radio, NR) system, a device to device (Device to Device, D2D) system, and a vehicle to everything (Vehicle to Everything, V2X) system.

An embodiment of this application provides an antenna system (Antenna System, AS). The antenna system may radiate an electromagnetic wave (Electromagnetic Wave, EW) to surrounding space or receive an electromagnetic wave from surrounding space. The electromagnetic wave is a basic form of existence of a material. A light wave is an electromagnetic wave. The electromagnetic wave is generally described by two parameters: frequency f (unit: Hz) and wavelength λ (unit: m). In a vacuum, a product of a frequency f and a wavelength λ of an electromagnetic wave is 3×108 m/s. In other words, a speed of the electromagnetic wave in the vacuum is 3×108 m/s. It may be understood that the technical solutions of this application may be applicable to an electromagnetic wave in a microwave frequency band. A frequency range of the electromagnetic wave in the microwave frequency band is 0.3 GHz to 300 GHz, and a wavelength range corresponding to the electromagnetic wave in the frequency range is 1 m to 1 mm.

The following briefly describes components of the antenna system. An antenna system, also called a base station antenna (Base Station Antenna, BSA), is an apparatus that can be used by an operator to radiate signals for electronic devices such as a mobile phone and receive signals, and is generally mounted on a top of a tower or a rooftop. In some application scenarios, the antenna system may include at least some of the following components such as an antenna array (Antenna Array, AA), a reflector plate (Reflector Plate, RP), a feed network (Feed Network, FN), and an antenna radome (Antenna Radome, AR). The following describes the foregoing components in detail.

The antenna array is an array structure formed by arranging a plurality of antenna elements (Antenna Element, AE) in a predetermined arrangement manner. The antenna element may be referred to as an element for short, and is a basic unit that forms the antenna array. The antenna element has a function of amplifying electromagnetic wave signals radiated by the antenna system and electromagnetic wave signals received by the antenna system.

The reflector plate is also referred to as a bottom plate, an antenna plate, or a metal reflection surface, and can be used to carry an antenna array and a feeding structure. In addition, as a main structure of the antenna system, the reflector plate can further have an electrical impact on the antenna system. The reflector plate can reflect and aggregate antenna signals on a receiving point, to enhance capabilities of the antenna system to receive and transmit antenna signals. In addition, the reflector plate can further block and shield other electromagnetic waves from a side away from the antenna array of the reflector plate.

The feed network is a network structure used to transmit antenna signals, and can implement a feeding function of the antenna system. In the antenna system, the feed network can feed an antenna signal to each antenna element based on a specific amplitude and phase, and can feed an antenna signal received from each antenna element to a signal processing unit of a base station based on a specific amplitude and phase. Generally, the feed network includes controlled impedance transmission lines.

The antenna radome is a mechanical part used to protect the antenna array, the reflector plate, and the feed network from an external environment. The antenna radome has good electromagnetic wave penetration in terms of electrical performance and can withstand harsh external environments in terms of mechanical performance.

Matching: In a transmission process of electrical signals from an input end to a tail end, the electrical signals are transmitted along a specific electrical path without any obstacles. This is called matching. The meaning of matching is to transmit the electrical signal from the input end to the tail end in a minimum reflection manner.

Mismatching: In a transmission process of electrical signals from an input end to a tail end, the electrical signals are transmitted along a specific electrical path, and some electrical signals are reflected back to the input end. This is called mismatching. A main cause of the mismatching is that when a transmission path from the input end to the tail end is uneven, some electrical signals are reflected back to the input end.

It can be learned from the background that modern communication imposes increasingly high requirements on a communication frequency band of a base station, and an operator expects that the base station has more communication frequency bands. Therefore, during antenna system design, a plurality of antenna arrays of different frequency bands need to be embedded or stacked in the base station. However, it is difficult to design this antenna system.

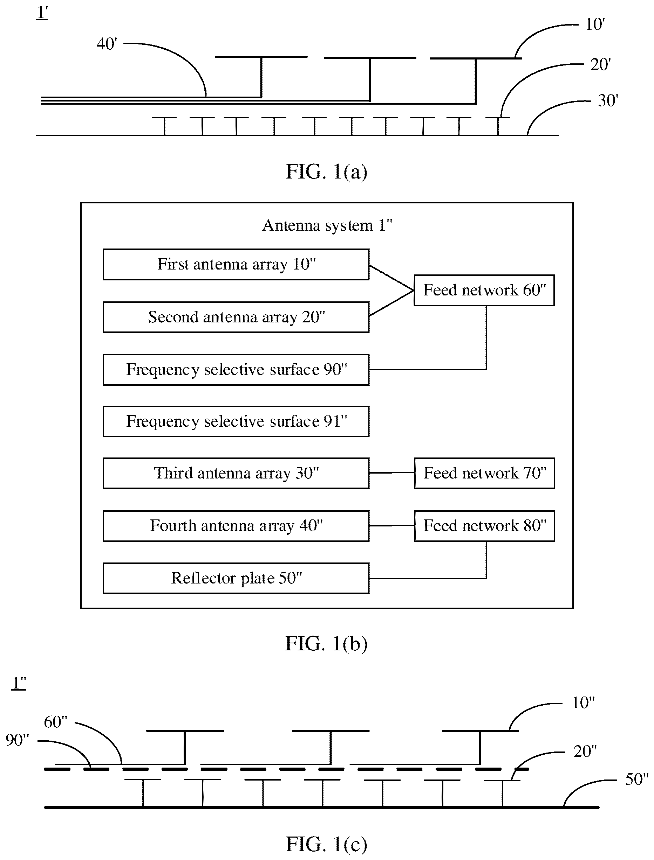

To resolve the foregoing problems, this application provides an antenna system 1'. FIG. 1(a) is a diagram of some antenna systems 1'. As shown in FIG. 1(a), the antenna system 1' includes a first antenna array 10', a second antenna array 20', a reflector plate 30', and a first feed network 40'. The first antenna array 10' corresponds to a first operating band, the second antenna array 20' corresponds to a second operating band, and the first operating band is different from the second operating band. The first antenna array 10' and the second antenna array 20' are arranged in a stacked manner relative to the reflector plate 30', and the first antenna array 10' is connected to the feed network 40'.

The antenna system 1' includes the first antenna array 10' and the second antenna array 20' that have different operating bands, so that operating bands are expanded and communication performance of the antenna system 1' is improved. However, the first antenna array 10' and the second antenna array 20' are arranged on one side of the reflector plate 30' in an interlacing and dense manner. As a result, components such as the first antenna array 10', the second antenna array 20', and the feed network 40' in the antenna system 1' are coupled to each other, and performance of the antenna system 1' is reduced. In addition, when an electromagnetic wave radiated by the second antenna array 20' transmits the first antenna array 10' and the first feed network 40', performance of the first antenna array 10' and the second antenna array 20' is also affected, and performance of the antenna system 1' is further reduced.

To resolve the foregoing problems, this application provides an antenna system. The antenna system includes a plurality of antenna arrays, feed networks corresponding to the plurality of antenna arrays, at least one layer of frequency selective surface (Frequency Selective Surface, FSS), and a reflector plate. All or some of the plurality of antenna arrays are arranged in a stacked manner relative to the reflector plate, and the at least one layer of frequency selective surface is located between the antenna arrays that are arranged in the stacked manner. A feed network corresponding to at least one of the stacked antenna arrays is electrically connected to the at least one layer of frequency selective surface, or a feed network corresponding to the at least one antenna array is integrated on the at least one layer of frequency selective surface. The following describes in detail with reference to accompanying drawings.

FIG. 1(b) is a diagram of some antenna systems 1". For example, as shown in FIG. 1(b), the antenna system 1" includes a first antenna array 10", a second antenna array 20", a third antenna array 30", a fourth antenna array 40", a reflector plate 50", a first feed network 60", a second feed network 70", a third feed network 80", and a frequency selective surface 90". The first antenna array 10", the second antenna array 20", the third antenna array 30", and the fourth antenna array 40" are arranged in a stacked manner relative to the reflector plate 50", and the first feed network 60" is connected to the first antenna array 10" and the second antenna array 20". The second feed network 70" is connected to the third antenna array 30" and the third feed network 80" is connected to the fourth antenna array 40". The frequency selective surface 90" is located between the second antenna array 20" and the third antenna array 30", and can effectively control transmission and reflection of incident electromagnetic waves.

FIG. 1(c) is a diagram of some other antenna systems 1". Further, as shown in FIG. 1(c), the antenna system 1" includes a first antenna array 10", a second antenna array 20", a reflector plate 50", a first feed network 60", and a frequency selective surface 90". The first antenna array 10" corresponds to a first operating band, the second antenna array 20" corresponds to a second operating band, the first antenna array 10" and the second antenna array 20" are arranged in a stacked manner relative to the reflector plate 50", and the first feed network 60" is connected to the first antenna array 10". The frequency selective surface 90" is located between the first antenna array 10" and the second antenna array 20", and can effectively control transmission and reflection of incident electromagnetic waves.

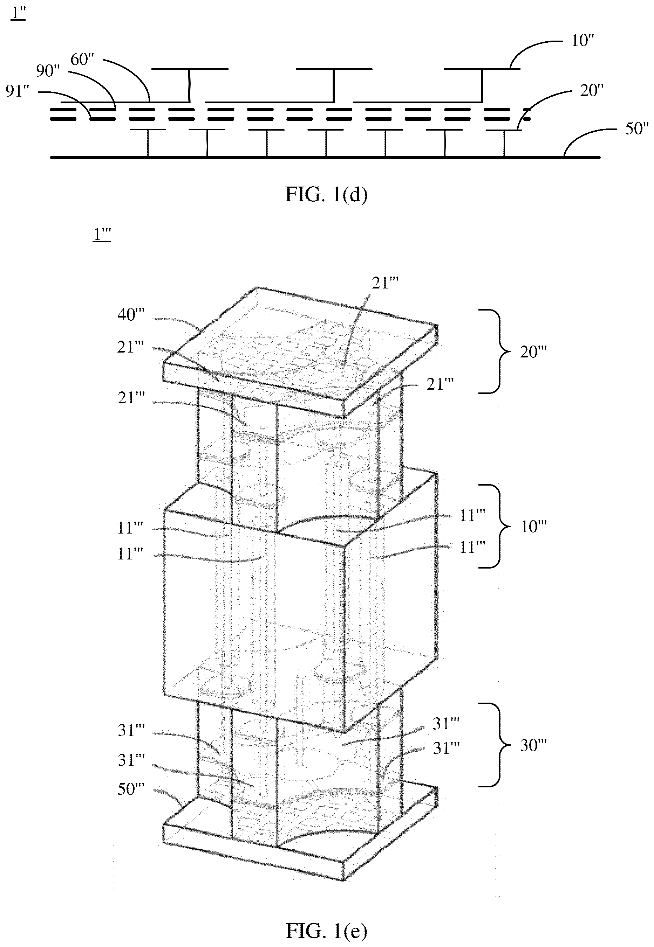

FIG. 1(d) is a diagram of some still other antenna systems 1". Further, as shown in FIG. 1(d), the antenna system 1" includes a first antenna array 10", a second antenna array 20", a reflector plate 50", a first feed network 60", a frequency selective surface 90", and a frequency selective surface 91". The first antenna array 10" and the second antenna array 20" are arranged in a stacked manner relative to the reflector plate 50", and the first feed network 60" is connected to the first antenna array 10". The frequency selective surface 90" and the frequency selective surface 91" are disposed between the first antenna array 10" and the second antenna array 20" in a stacked manner, and can effectively control transmission and reflection of incident electromagnetic waves.

In the foregoing antenna system, at least one layer of frequency selective surface is added between the stacked antenna arrays, and at least one of the at least one layer of frequency selective surface is electrically connected to at least one of feed networks corresponding to the stacked antenna arrays. Because the frequency selective surface has a passband characteristic for an operating frequency of the antenna array, electromagnetic waves radiated by the antenna array can well transmit the frequency selective surface, to reduce impact of the feed network on the electromagnetic waves radiated by the antenna array, and improve performance of the antenna system. However, in the foregoing antenna system, electromagnetic interference is generated between the feed network and the frequency selective surface, and an induced current generated by electromagnetic induction affects performance of an antenna element in the antenna array. In addition, the antenna array, the frequency selective surface, and the feed network are coupled to each other. Therefore, a decoupling solution of the antenna system is complex. In conclusion, interaction between the feed network and the frequency selective surface increases design difficulty of the antenna system.

In addition, to resolve the problems in the background, this application further provides an antenna radome. In the antenna radome, frequency selective surfaces are arranged on two sides of a radiator structure, so that an operating frequency range of the radiator structure can be effectively adjusted. The following describes a specific structure of the antenna radome in detail with reference to the accompanying drawings.

FIG. 1(e) is a diagram of some antenna radomes 1'" for antenna shielding devices. As shown in FIG. 1(e), the antenna radome 1"' includes a conductive ground surface 10"', a radiator structure 20‴, a radiator structure 30"', a frequency selective surface 40"', and a frequency selective surface 50"'. The conductive ground surface 10'" provides bearing and/or ballistic protection for the antenna shielding device, and the conductive ground surface 10"' includes a plurality of coaxial feed-throughs 11"'. The radiator structure 20"' and the radiator structure 30'" are respectively coupled to opposite surfaces of the conductive ground surface 10"'. The radiator structure 20‴ includes a plurality of antenna elements 21‴ and the radiator structure 30"' includes a plurality of antenna elements 31"'. The coaxial feed-through 11"' is configured to couple an antenna element 21"' and an antenna element 31"' that correspond to each other and is configured to re-radiate a received radio frequency signal to a radio frequency sensor. The frequency selective surface 40‴ is located on a side that is of the radiator structure 20'" and that face away from the conductive ground surface 10"', and the frequency selective surface 50"' is located on a side that is of the radiator structure 30"' and that face away from the conductive ground surface 10"'. The radiator structure 20"' may adjust an operating frequency range based on the frequency selective surface 40"', and the radiator structure 30"' may adjust an operating frequency range based on the frequency selective surface 50"', to complete frequency response of the antenna shielding device.

The antenna shielding device corresponding to the antenna radome 1"' has a wide operating frequency range, a wide transmitting angle range, and a wide receiving angle range, and is mechanically solid and electromagnetically transparent. However, the antenna radome 1"' is only an antenna-filter-antenna (antenna-filter-antenna, AFA) frequency selective structure, and does not involve an integrated solution of an antenna array and a feed network.

Based on this, to resolve the foregoing problems, this application provides an antenna system. The antenna system may include a frequency selective architecture, a first antenna array, and a second antenna array. The first antenna array operates on a first operating band, the second antenna array operates on a second operating band, and the first operating band is different from the second operating band. The first antenna array and the second antenna array are disposed opposite to each other in a third direction, and the frequency selective architecture is located between the first antenna array and the second antenna array. The frequency selective architecture includes a frequency selective structure and a shielding shell. The shielding shell is mounted on the frequency selective structure, and may be configured to accommodate a signal transmission network corresponding to the first antenna array and a signal transmission network corresponding to the second antenna array. The signal transmission network may be configured to feed power to the first antenna array and the second antenna array. It may be understood that the signal transmission network and the shielding shell may form a feed network. The signal transmission network may be at least one of a coaxial cable, a signal transmission line, a circuit board microstrip, and a phase shifter. This is not specifically limited in this application. The first antenna array is connected to the shielding shell in the frequency selective architecture. The frequency selective architecture may be used to reflect an electromagnetic wave of the first operating band, and may be used to transmit an electromagnetic wave of the second operating band.

It should be noted that "connection" in this application may be understood as that two or more components are conducted or connected in an "electrical connection" or "coupling connection" manner to perform signal/energy transmission. In this application, the "electrical connection" may be understood that components contact physically and conduct electrically. It may also be understood as a form in which different components in a line structure are connected through physical lines that can transmit an electrical signal, such as a printed circuit board (Printed Circuit Board, PCB) copper foil or a conducting wire. The "coupling connection" is a phenomenon that two or more circuit elements or electrical networks closely cooperate with and affect each other in input and output, so that energy is transmitted from one side to another side through interaction. "Connection" is not described in the following.

In this application, the antenna system may include the frequency selective architecture, the first antenna array, and the second antenna array, and the frequency selective architecture includes the frequency selective structure and the shielding shell. In this application, an external shell (namely, the shielding shell) of the feed network is used as a part of the frequency selective architecture. In other words, when a related parameter of the frequency selective structure is designed, the feed network is considered as an impact factor. Parameters of the frequency selective structure and parameters of the shielding shell are comprehensively considered, and the frequency selective architecture is appropriately designed, so that coupling between components including the frequency selective structure and the feed network in the antenna system can be reduced. Therefore, coupling between the feed network and another component in the antenna system can be reduced. For example, coupling between the feed network and the frequency selective structure is reduced. For another example, coupling between the feed network and the first antenna array and/or the second antenna array is reduced. Based on this, electromagnetic induction between the feed network and another component in the antenna system can be reduced, and induced currents on components such as the feed network and the frequency selective structure are further reduced, so that performance of antenna elements in the first antenna array and the second antenna array is maintained. In conclusion, the foregoing technical solution can reduce design difficulty of the antenna system.

The following describes in detail the antenna system in this application with reference to the accompanying drawings.

For ease of description and understanding, before a specific structure of the antenna system is described, an array plane, a positive direction of an x axis, a positive direction of a y axis, and a positive direction of a z axis are first defined. In this application, the array plane is a plane on which antenna elements are distributed in arrays in the antenna system, and the plane is a plane parallel to a plane on which a reflector plate is located. A polarization direction of the antenna element is not specifically limited in this application. An incident direction of the electromagnetic wave intersects the array plane.

The positive direction of the x axis is parallel to the array plane, the positive direction of the y axis is also parallel to the array plane, the positive direction of the z axis intersects the array plane, and the positive direction of the x axis, the positive direction of the y axis, and the positive direction of the z axis intersect each other. For example, as shown in the following accompanying drawings, the positive direction of the x axis is a direction from left to right, the positive direction of the y axis is a direction from front to back, and the positive direction of the z axis is a direction from bottom to top.

In some implementations, the positive direction of the z axis is perpendicular to the array plane. To be specific, the positive direction of the x axis is perpendicular to the positive direction of the z axis, and the positive direction of the y axis is perpendicular to the positive direction of the z axis.

In some implementations, the positive direction of the z axis is perpendicular to the array plane, and the positive direction of the x axis, the positive direction of the y axis, and the positive direction of the z axis are perpendicular to each other.

It may be understood that mutual parallelism in this application is not absolute mutual parallelism, and approximate parallelism (for example, an included angle between two structure features is 0.1° or 1°) due to factors such as a processing error and an assembly error also falls within a range of the mutual parallelism in this application. Similarly, mutual perpendicularity in this application is not absolute perpendicularity, and approximate perpendicularity (for example, an included angle between two structure features is 89.9° or 89°) due to factors such as a processing error and an assembly error also falls within a range of the mutual perpendicularity in this application. The following does not repeatedly describe limitations on the mutual perpendicularity and the mutual parallelism.

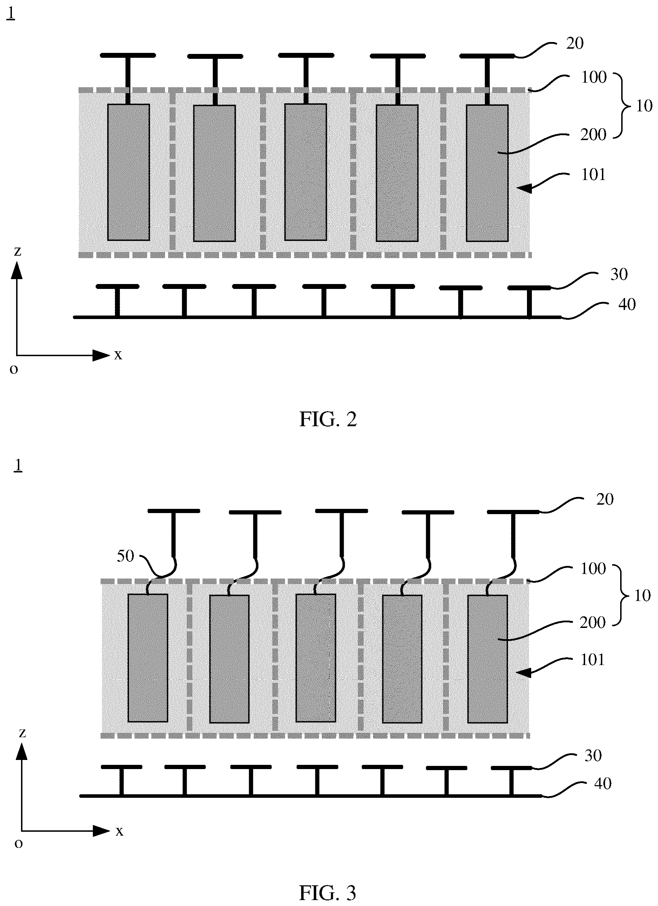

FIG. 2 is a diagram of an antenna system 1 according to some embodiments of this application. As shown in FIG. 2, in some embodiments of this application, the antenna system 1 includes a frequency selective architecture 10, a first antenna array 20, a second antenna array 30, and a reflector plate 40. The first antenna array 20, the second antenna array 30, and the reflector plate 40 are successively arranged opposite to each other. The frequency selective architecture 10 is located between the first antenna array 20 and the second antenna array 30. The frequency selective architecture 10 includes a frequency selective structure 100 and a shielding shell 200 (for example, a gray area in FIG.2). The shielding shell 200 is mounted on the frequency selective structure 100. For example, the frequency selective structure 100 may be a three-dimensional structure formed by a printed circuit board, and the shielding shell 200 may include a metal shielding cavity. The frequency selective structure 100 forms a mounting channel 101 (for example, a light gray area in FIG. 2), and the mounting channel 101 is reserved space that can be used to accommodate another element. The shielding shell 200 is located in the mounting channel 101. The first antenna array 20 is connected to the shielding shell 200 in the frequency selective architecture 10.

The first antenna array 20 corresponds to a first operating band, the second antenna array 30 corresponds to a second operating band, and the first operating band is different from the second operating band. The frequency selective architecture 10 is capable of reflecting an electromagnetic wave of the first operating band, and transmitting an electromagnetic wave of the second operating band. The operating band may be understood as a frequency range in which the antenna array, in an operating state, can receive and radiate an electromagnetic wave. In other words, the frequency selective structure 100 and the shielding shell 200 may be combined to reflect the electromagnetic wave of the first operating band and transmit the electromagnetic wave of the second operating band. The shielding shell 200 may be used to arrange a signal transmission network (not shown in the figure), and the signal transmission network may implement a feeding function of the antenna system 1. Both the first antenna array 20 and the second antenna array 30 are array structures formed by arranging a plurality of antenna elements (not shown in the figure) in a predetermined arrangement manner. The antenna elements, as basic units that form the antenna array, have a function of amplifying electromagnetic wave signals radiated by the antenna system and electromagnetic wave signals received by the antenna system.

In the foregoing antenna system 1, both the first antenna array 20 and the second antenna array 30 exist, the first antenna array 20 corresponds to the first operating band, the second antenna array 30 corresponds to the second operating band, and the first operating band is different from the second operating band. This implements diversity of communication frequency bands of the antenna system 1. In addition, the frequency selective structure 100 in the frequency selective architecture 10 may reflect the electromagnetic wave of the first operating band and transmit the electromagnetic wave of the second operating band, to implement electromagnetic transparency of the first antenna array 20 to the second antenna array 30. In addition, the shielding shell 200 used to accommodate the signal transmission network is arranged in the mounting channel 101 formed in the frequency selective structure 100, so that the signal transmission network can be shielded in the shielding shell 200, and coupling between a feed network and another component in the antenna system can be reduced. For example, coupling between the feed network and the frequency selective structure 100 is reduced. For another example, coupling between the feed network and the first antenna array 20 and/or the second antenna array 30 is reduced. Based on this, electromagnetic induction between the feed network and another component in the antenna system 1 can be reduced, and induced currents on components such as the feed network and the frequency selective structure 100 are further reduced, so that performance of the antenna elements in the first antenna array 20 and the second antenna array 30 is maintained. In other words, this application can reduce design difficulty of the antenna system 1. In the foregoing antenna system 1, the shielding shell 200 is located in the mounting channel 101 formed in the frequency selective structure 100, and an accommodation cavity of the shielding shell 200 is configured to accommodate the signal transmission network, so that signal transmission network hiding can be implemented, and the shielding shell 200 and the signal transmission network do not need to be arranged outside the frequency selective structure 100 (it may be understood that the shielding shell 200 and the signal transmission network may be combined to be used as the feed network). This makes a structure of the frequency selective architecture 10 compact, and improves space utilization of the antenna system 1.

**In** some other implementations, the shielding shell 200 is integrated on the frequency selective structure 100. For example, the frequency selective structure 100 is a planar two-dimensional structure, and the shielding shell 200 is mounted on one surface of the frequency selective structure 100. For another example, the frequency selective structure 100 is a planar two-dimensional structure, and the shielding shell 200 penetrates the frequency selective structure 100 and is distributed on two opposite sides of the frequency selective structure 100.

In some other implementations, the frequency selective structure 100 may alternatively be integrated on the shielding shell 200. For example, the shielding shell 200 is a metal shell, and the frequency selective structure 100 is carved on a surface of the metal shell.

It may be understood that specific structures of the frequency selective structure 100 and the shielding shell 200 are not specifically limited in this application. The frequency selective structure 100 and the shielding shell 200 that can be combined to reflect the electromagnetic wave of the first operating band and transmit the electromagnetic wave of the second operating band in any form fall within the protection scope of this application.

In some embodiments of this application, in the antenna system 1, the frequency selective structure 100 is relatively fixed to the shielding shell 200. In the foregoing antenna system 1, the frequency selective structure 100 and the shielding shell 200 are integrated. In this way, a quantity of parts in the antenna system 1 is reduced, assembly difficulty of the antenna 1 system is reduced, and a refined and simplified design of the entire antenna system 1 is implemented. In addition, an assembly error of the antenna system 1 is reduced by reducing the quantity of parts in the antenna system 1, and precision of the antenna system 1 is improved.

In some implementations, the frequency selective structure 100 is connected to the shielding shell 200. It may be understood that, in this application, "connection", "connected", and "connect" may all refer to a mechanical connection relationship or a physical connection relationship. To be specific, that A is connected to B may mean that surfaces of A and B are attached to each other, or there is a fastening component (such as a screw, a bolt, or a nail) between A and B, or A and B are in contact with each other and A and B are difficult to be separated. For example, a connection manner between the frequency selective structure 100 and the shielding shell 200 may be at least one of clamping, bonding, and welding.

In some other alternative implementations, the frequency selective structure 100 and the shielding shell 200 are connected by using an intermediate component. For example, the intermediate component may be a buffer layer located between the frequency selective structure 100 and the shielding shell 200, and the frequency selective structure 100 is connected to the shielding shell 200 by using the buffer layer. For another example, the intermediate component may be a mounting bracket, and the shielding shell 200 is mounted on the frequency selective structure 100 by using the mounting bracket. In this application, any component that can connect the frequency selective structure 100 to the shielding shell 200 may be used as the intermediate component in this application. This is not specifically limited in this application.

In some embodiments of this application, the frequency selective structure 100 is not connected to the shielding shell 200. For example, an insulation component is disposed between the frequency selective structure 100 and the shielding shell 200, to avoid connection between the frequency selective structure 100 and the shielding shell 200. In the foregoing antenna system 1, because the frequency selective structure 100 is not connected to the shielding shell 200, an impact factor in a design process of the frequency selective structure 100 is reduced, design difficulty of the antenna system 1 is reduced, and a debugging period of the antenna system 1 is shortened.

In some other embodiments of this application, the frequency selective structure 100 is connected to the shielding shell 200. In the foregoing antenna system 1, the frequency selective structure 100 is connected to the shielding shell 200, so that a connection manner between the frequency selective structure 100 and the shielding shell 200 is simplified, and assembly difficulty of the antenna system 1 is reduced.

In some implementations, the frequency selective structure 100 is connected to the shielding shell 200 at a connection position. For example, the frequency selective structure 100 and the shielding shell 200 are welded together. For another example, the frequency selective structure 100 and the shielding shell 200 are bonded by using a conductive adhesive tape. In some other alternative implementations, the frequency selective structure 100 is coupled to the shielding shell 200. In some other alternative implementations, the frequency selective structure 100 is connected to the shielding shell 200 through a physical line. The physical line may include at least one of a coaxial cable, a signal transmission line, and a printed circuit board microstrip. This is not specifically limited in this application.

It can be learned from the foregoing that the first antenna array 20 is arranged on the shielding shell 200 in the frequency selective architecture 10, and the first antenna array 20 is connected to the shielding shell 200 in the frequency selective architecture 10. Each antenna element in the first antenna array 20 includes two baluns. That the first antenna array 20 is connected to the shielding shell 200 means that one balun of the antenna element is connected to the shielding shell 200. Another balun of the antenna element is connected to the signal transmission network in the shielding shell 200. The following describes connection manners between the shielding shell 200 and the first antenna array 20 in the frequency selective architecture 10 with reference to the accompanying drawings.

In some embodiments of this application, a connection manner between the first antenna array 20 and the shielding shell 200 is direct electrical connection. The direct electrical connection means that the first antenna array 20 is in direct contact with the shielding shell 200 and is electrically connected to the shielding shell 200. For example, as shown in FIG. 2, the first antenna array 20 is directly arranged on the shielding shell 200, and the first antenna array 20 is electrically connected to the shielding shell 200.

In some other embodiments of this application, a connection manner between the first antenna array 20 and the shielding shell 200 is indirect electrical connection. FIG. 3 is a diagram of an antenna system 1 according to some embodiments of this application. For example, as shown in FIG. 3, the antenna system 1 further includes a physical line 50. One end of the physical line 50 is electrically connected to the first antenna array 20, and the other end of the physical line 50 is electrically connected to the shielding shell 200. The first antenna array 20 is electrically connected to the shielding shell 200 through the physical line 50. The physical line 50 may include at least one of a coaxial cable, a signal transmission line, and a printed circuit board microstrip. This is not specifically limited in this application.

In some other embodiments of this application, in the antenna system 1, the first antenna array 20 is coupled to the shielding shell 200. For example, the first antenna array 20 is disposed at an interval with the shielding shell 200, and the first antenna array 20 is coupled to the shielding shell 200.

In some other embodiments of this application, a cavity wall shape of the shielding shell 200 may be at least one of a rectangle, a cylinder, or a hexagonal column. This is not specifically limited in this application.

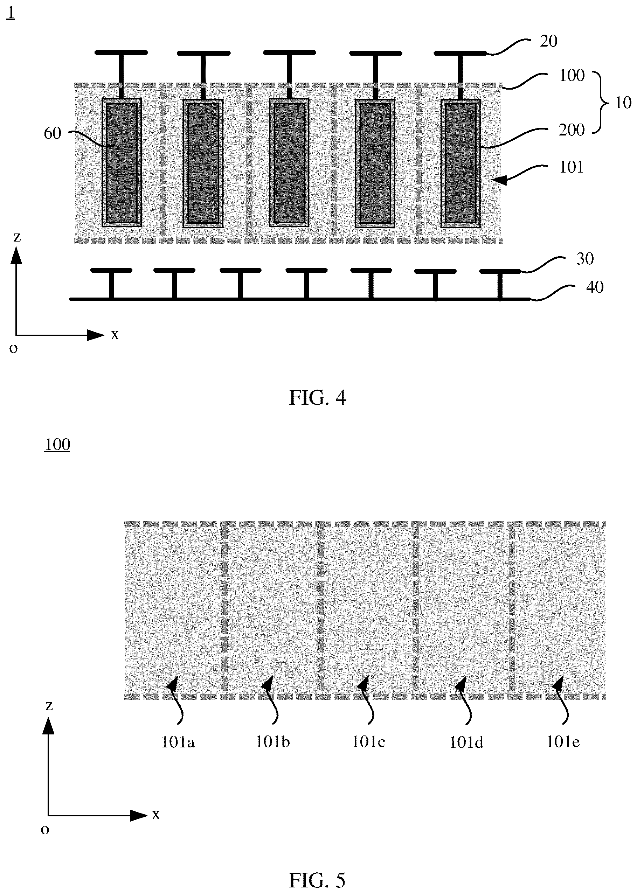

FIG. 4 is a diagram of an antenna system 1 according to some embodiments of this application. As shown in FIG. 4, the antenna system 1 further includes a signal transmission network 60, and the signal transmission network 60 is arranged in the shielding shell 200. The signal transmission network 60 is configured to feed power to the first antenna array 20 and/or the second antenna array 30.

In some embodiments of this application, the signal transmission network 60 may include a coaxial cable. The coaxial cable is connected to the first antenna array 20 through the frequency selective architecture 10. In some implementations, the signal transmission network 60 is a coaxial cable. The coaxial cable includes an external conductor and an internal conductor, where the external conductor is connected to the shielding shell 200, and is connected to one input end of the antenna element in the first antenna array 20, and the internal conductor is connected to the other input end of the antenna element in the first antenna array 20. For example, the external conductor is welded to the shielding shell 200. In some other alternative implementations, the signal transmission network 60 is an internal conductor in the coaxial cable, and the shielding shell 200 is used as an external conductor in the coaxial cable. The shielding shell 200 is connected to one input end of the antenna element in the first antenna array 20, and the signal transmission network 60 is connected to the other input end of the antenna element in the first antenna array 20.

In some other embodiments of this application, the signal transmission network 60 may include a phase shifter. The phase shifter is located in the shielding shell 200, and is connected to the first antenna array 20. The phase shifter may implement electrical adjustment on a directivity pattern of an antenna system by changing a phase of a signal, to achieve an objective of remotely controlling and adjusting a network coverage area in different cases. It may be understood that a manner of connecting the phase shifter to the shielding shell 200 and the first antenna array 20 in this embodiment is basically the same as a manner of connecting the coaxial cable to the shielding shell 200 and the first antenna array 20 in the foregoing embodiments, and details are not described herein again.

In some other embodiments of this application, the signal transmission network 60 may include components that can extend performance, such as a phase shifter, a filter (Filter), and a combiner (Combiner). The components that can extend performance, such as the phase shifter, the filter, and the combiner, are located in the shielding shell 200, and are connected to the first antenna array 20. The filter is a filter circuit including a capacitor, an inductor, and a resistor. The filter may effectively filter out a frequency other than a specific frequency in a power cable, to obtain a power signal of the specific frequency, and may alternatively effectively filter out a specific frequency in a power cable, to obtain a power signal in which the specific frequency is eliminated. The combiner is a composite unit formed by a plurality of filters. The composite unit is a multiport network, and all ports are input/output dual-function ports. It may be understood that a manner of connecting the phase shifter, the filter, and the combiner to the shielding shell 200 and the first antenna array 20 in this embodiment is basically the same as a manner of connecting the coaxial cable to the shielding shell 200 and the first antenna array 20 in the foregoing embodiments, and details are not described herein again.

It may be understood that, in the antenna system in this application, another component in the antenna system may be further placed in the shielding shell 200. The foregoing embodiments are merely some examples, but are not specifically limited in this application.

In this application, the frequency selective architecture 10 includes the frequency selective structure 100 and the shielding shell 200. The following describes basic structures of the frequency selective structure 100 and the shielding shell 200.

In some embodiments of this application, the frequency selective structure 100 includes several frequency selective units. The several frequency selective units are combined into a three-dimensional structure, and the three-dimensional structure forms at least two mounting channels 101.

In some implementations, the frequency selective unit includes a planar pattern. The pattern may be a two-dimensional planar structure whose arrays are distributed periodically, can effectively control transmission and reflection of incident electromagnetic waves, and has a function of selecting an electromagnetic wave of a specific frequency. It may be understood that the incident electromagnetic wave is an electromagnetic wave that is incident to the frequency selective unit, and may be an electromagnetic wave radiated by the second antenna array, or may be an electromagnetic wave received by the first antenna array. The frequency selective unit may be understood as a spatial filter, and can interact with an electromagnetic wave to show an obvious band-pass or band-stop filtering characteristic. In some implementations, the frequency selective unit includes at least two patterns that are cross-connected to each other, and a connection manner between the at least two planar patterns includes at least one of clamping, bonding, and welding.

In this application, the frequency selective unit may be a transmissive frequency selective surface. In other words, the frequency selective surface presents transmittance to an incident wave in a resonance case. Alternatively, the frequency selective unit may be a reflective frequency selective surface. In other words, the frequency selective surface presents reflection to an incident wave in a resonance case. The frequency selective surface is widely used in microwave, infrared and visible light bands due to specific frequency selective effects.

In some embodiments of this application, the frequency selective unit may be a surface-mounting frequency selective surface. The surface-mounting frequency selective surface periodically attaches metal pattern units to a dielectric surface, and the frequency selective units are generally used as band-stop filters. In other words, the surface-mounting frequency selective surface may implement low-frequency transmission and high-frequency reflection.

In some other embodiments of this application, the frequency selective unit may be a slotted frequency selective surface. The slotted frequency selective surface periodically provides metal unit slot holes on a metal plate and. From a perspective of frequency characteristics, this type of frequency selective unit corresponds to a band-pass frequency selective surface. In other words, the slotted frequency selective surface may implement low-frequency reflection and high-frequency transmission.

In some implementations, the frequency selective unit may be a printed circuit board. For example, a metal layer may be disposed on one side of the PCB board, and the metal layer may be formed by etching metal on a surface of the PCB board. The metal layer may be used to ground an electronic element born on the PCB, to prevent a user from getting an electric shock or prevent the device from being damaged.

In some embodiments of this application, in the antenna system 1, the frequency selective structure may be a metamaterial (Metamaterial) structure, to reflect an electromagnetic wave of a first operating band and transmit an electromagnetic wave of a second operating band, where the first operating band is different from the second operating band. It may be understood that the metamaterial refers to some composite materials that have a manually designed structure and present an ultra-normal physical property that is not possessed by a natural material.

In some implementations, in the frequency selective structure 100 in this application, the mounting channel 101 may be a closed channel. In other words, frequency selective units are arranged around the mounting channel 101 in an extension direction of the mounting channel 101. In some other alternative implementations, in the frequency selective structure 100 in this application, the mounting channel 101 may alternatively be a semi-open channel. In other words, frequency selective surfaces are arranged in a partial area around the mounting channel 101 in an extension direction of the mounting channel 101. This is not specifically limited in this application.

In some embodiments of this application, the frequency selective structure 100 includes several frequency selective units. The several frequency selective units are combined into a two-dimensional planar structure, and the shielding shell 200 is integrated in a three-dimensional structure formed by two-dimensional planar structures.

In some embodiments of this application, the frequency selective units are connected to each other. In some implementations, a connection manner between the frequency selective units includes at least one of clamping, bonding, and welding. It may be understood that a specific connection manner between the frequency selective units may be flexibly adjusted based on a size of assembly space and assembly difficulty. This is not specifically limited in this application.

In some other embodiments of this application, in the frequency selective structure, the frequency selective units are assembled on an outer surface of the shielding shell 200, so that indirect connection of the frequency selective surfaces is implemented by using the shielding shell 200.

In some embodiments of this application, the frequency selective units are connected to each other. In addition, for a manner in which the frequency selective units are connected to each other, refer to a manner in which the frequency selective structure 100 is connected to the shielding shell 200. Details are not described herein. In some other embodiments of this application, the frequency selective units are not connected to each other. This is not specifically limited in this application.

Before a structure of the frequency selective structure 100 is described, the mounting channel 101 formed in the frequency selective structure 100 is first described.

In some embodiments of this application, the mounting channel 101 formed in the frequency selective structure 100 may be but is not limited to at least one of strip space, mesh space, dot space, and block space. This is not specifically limited in this application.

FIG. 5 is a diagram of a frequency selective structure 100 according to some embodiments of this application. As shown in FIG. 5, in some embodiments of this application, the frequency selective structure 100 forms at least two mounting channels. For example, the frequency selective structure 100 forms five strip-shaped mounting channels, and the mounting channels specifically include a mounting channel 101a, a mounting channel 101b, a mounting channel 101c, a mounting channel 101d, and a mounting channel 101e. The at least two mounting channels are arranged in parallel in a first direction d₁, and each mounting channel extends in a second direction d₂. The first direction d₁ intersects the second direction d₂. A parallel arrangement direction of at least two components is a direction in which one component points to the other component. An extension direction of a component refers to a direction in which one end of the component points to the other end of the component along an extension form of the component. It may be understood that, in this application, arrangement or extension in a direction does not mean absolute arrangement or extension in the direction, but means rough arrangement or extension in the direction. A technical solution within a specific deviation range also falls within the protection scope of this application. This is not specifically limited in this application.

In some implementations, the first direction d₁ and the second direction d₂ are perpendicular to each other. For example, the first direction d₁ may be a positive direction of an x axis, and the second direction d₂ may be a positive direction of a y axis.

In some implementations, the mounting channel 101 is strip space, and a cross section of the mounting channel 101 may be a rectangle, a circle, an ellipse, a triangle, a quadrilateral, a pentagon, a hexagon, or the like. This is not specifically limited in this application. The cross section is a plane that cross-cuts the mounting channel and intersects the extension direction of the mounting channel.

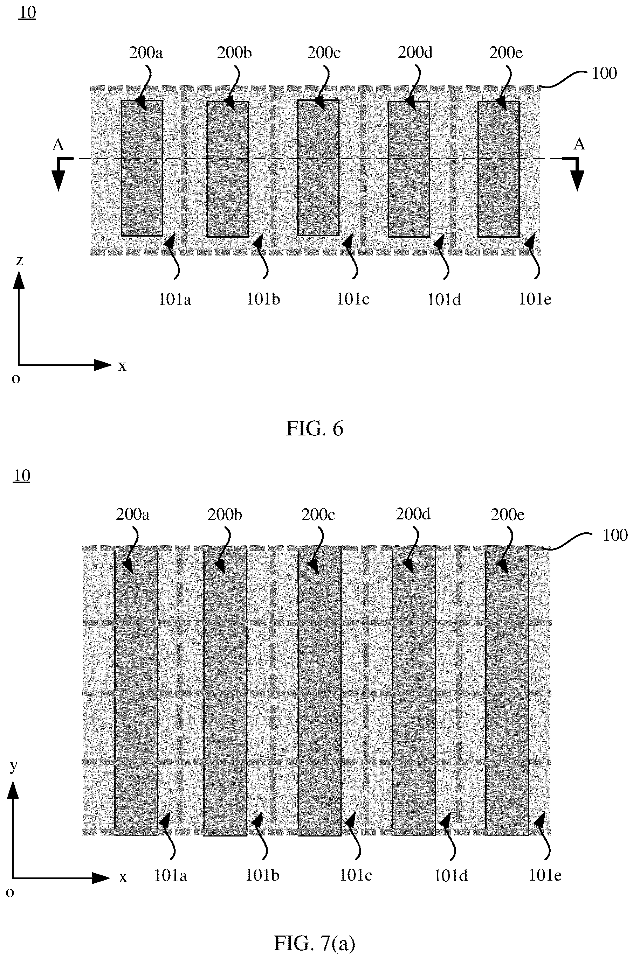

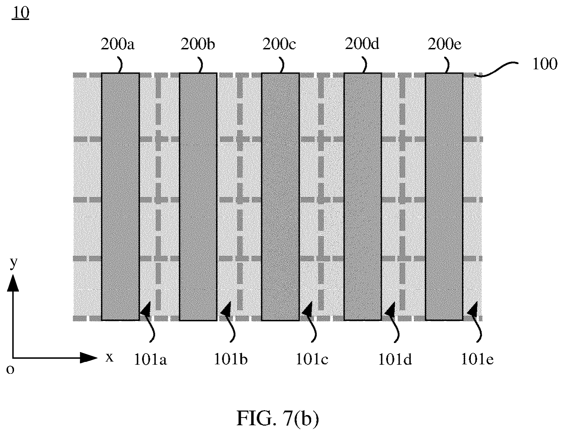

FIG. 6 is a front view of a frequency selective architecture 10 according to some embodiments of this application. FIG. 7(a) is a top view of a frequency selective architecture 10 according to some embodiments of this application. FIG. 7(b) is a cross-sectional view of a frequency selective architecture 10 along a section A-A in FIG. 6 according to some embodiments of this application. It can be learned from FIG. 6, FIG. 7(a), and FIG. 7(b) that the mounting channel in the antenna system 1 is the same as the mounting channel in FIG. 5. In addition, the antenna system 1 includes five shielding shells, and the shielding shells specifically include a shielding shell 200a, a shielding shell 200b, a shielding shell 200c, a shielding shell 200d, and a shielding shell 200e. The five shielding shells are also in a strip structure. The five mounting channels in the frequency selective structure 100 are independent of each other, and each of the five mounting channels may be separately arranged with a shielding shell. For example, the shielding shell 200a is arranged in the mounting channel 101a, the shielding shell 200b is arranged in the mounting channel 101b, the shielding shell 200c is arranged in the mounting channel 101c, the shielding shell 200d is arranged in the mounting channel 101d, and the shielding shell 200e is arranged in the mounting channel 101e.

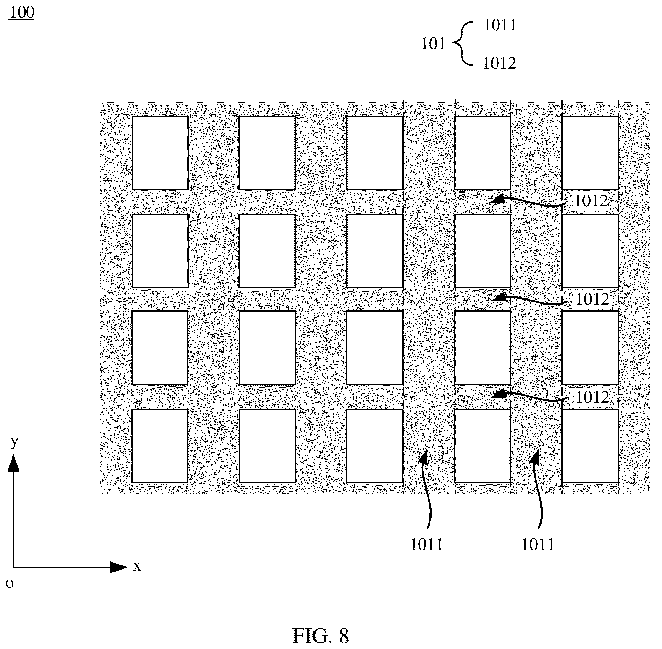

In some other embodiments of this application, the mounting channel 101 is mesh space. FIG. 8 is a top view of a frequency selective structure 100 in some other embodiments of this application. A top view angle in this application is a negative direction of a z axis. As shown in FIG. 8, in some implementations, the mounting channel 101 is single-layer mesh space. The mounting channel 101 includes a primary channel 1011 and a secondary channel 1012 that are arranged in a cross manner. There are at least two primary channels 1011, and the at least two primary channels 1011 are arranged in parallel in the first direction d₁, and each primary channel 1011 extends in the second direction d₂. At least two secondary channels 1012 connect the at least two primary channels 1011, and jointly form a mesh structure.

In some implementations, the mesh space may be a multi-layer mesh structure. It may be understood that the multi-layer mesh structure may be formed by superimposing the single-layer mesh structures in the foregoing implementation. Details are not described herein.

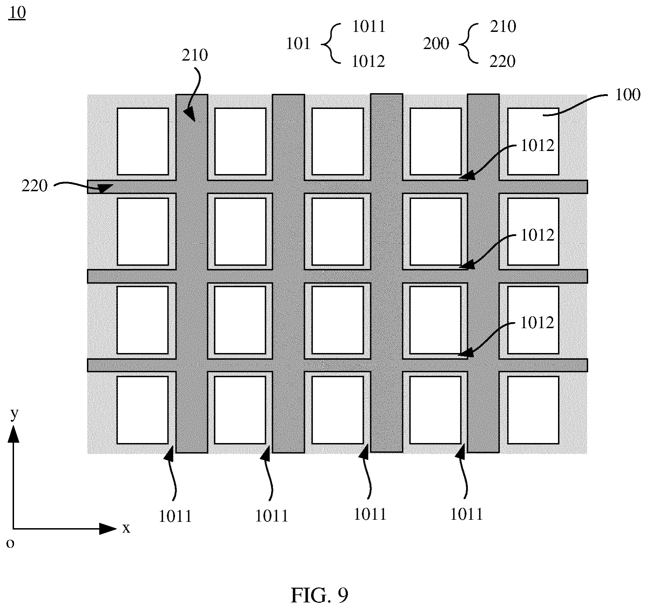

In some embodiments of this application, the mounting channel 101 is in mesh space, and the shielding shell 200 arranged in the mounting channel 101 is also in a mesh structure. The primary channel 1011 and the secondary channel 1012 jointly accommodate the meshed shielding shell 200. FIG. 9 is a top view of a frequency selective architecture 10 according to some embodiments of this application. The mounting channel 101 formed by the frequency selective structure 100 and the shielding shell 200 arranged in the mounting channel 101 in FIG. 9 are different from those in the frequency selective architecture 10 shown in FIG. 6 to FIG. 7(b). In FIG. 9, the mounting channel 101 is in a mesh structure. For details, refer to FIG. 8. The shielding shell 200 is in a mesh structure that adapts to the mounting channel 101. As shown in FIG. 9, the shielding shell 200 includes a primary shell 210 and a secondary shell 220. The primary shell 210 is correspondingly disposed in the primary channel 1011, and the secondary shell 220 is correspondingly disposed in the secondary channel 1012. The shielding shell 200 formed by the primary shell 210 and the secondary shell 220 may be used to arrange a signal transmission network.

In some implementations, the primary shell 210 is of a hollow tubular structure, the secondary shell 220 is of a solid structure, and the signal transmission network 60 may be distributed in the primary shell 210. For example, the primary shell 210 is a metal tube, the secondary shell 220 is a metal wire, two ends of the metal wire are respectively connected to two metal tubes, and the signal transmission network 60 may be distributed in the metal tube.

In some other alternative implementations, the primary shell 210 is of a hollow tubular structure, the secondary channel 1012 is also of a hollow tubular structure, and the signal transmission network 60 may be distributed in the primary shell 210 and/or the secondary shell 220. For example, both the primary shell 210 and the secondary shell 220 are metal tubes. It may be understood that a hollow part in the primary shell 210 may be connected to a hollow part in the secondary shell 220, or may not be connected to a hollow part in the secondary shell 220. This is not specifically limited in this application. The signal transmission network 60 may be distributed in any metal tube in the shielding shell 200. This is not specifically limited in this application.

In some other alternative implementations, the primary shell 210 is of a solid structure, the secondary shell 220 is of a hollow tubular structure, and the signal transmission network 60 may be distributed in the secondary shell 220. For example, the primary shell 210 is a metal wire, the secondary shell 220 is a metal tube, two ends of the metal wire are respectively connected to two metal tubes, and the signal transmission network 60 may be distributed in the metal tube.

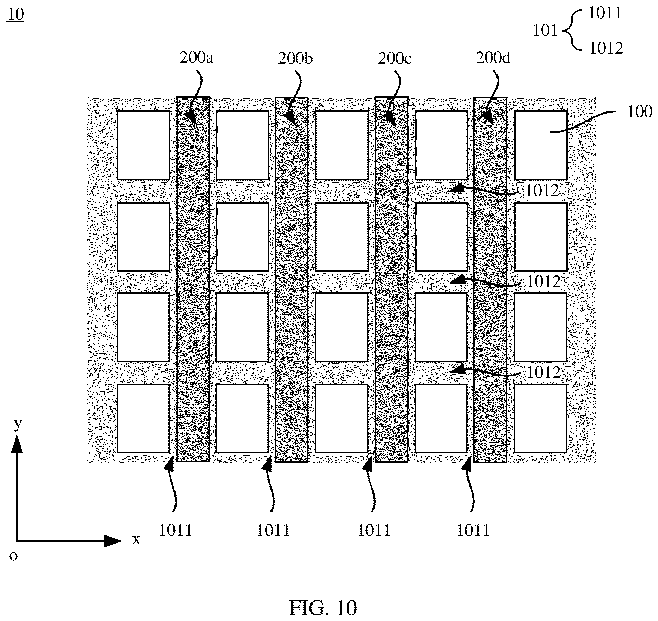

In some other embodiments, the mounting channel 101 is in mesh space, and the shielding shell 200 arranged in the mounting channel 101 is in a strip structure. The shielding shell 200 is located in the primary channel 1011 and/or the secondary channel 1012. FIG. 10 is a top view of a frequency selective architecture 10 according to some embodiments of this application. The shielding shell 200 arranged in the mounting channel 101 in FIG. 10 is different from that in the frequency selective architecture 10 shown in FIG. 9. In FIG. 10, the shielding shell 200 is in a strip structure and is arranged in the primary channel 1011. In some other alternative implementations, the shielding shell 200 is in a strip structure and is arranged in the secondary channel 1012. In some other alternative implementations, the shielding shell 200 is in a strip structure, and is arranged in the primary channel 1011 and the secondary channel 1012.

In some embodiments of this application, the frequency selective structure 100 is provided with a hollow part (not shown), and the hollow part is connected to a channel surface of the mounting channel 101 and an external surface of the frequency selective structure 100. The first antenna array 20 penetrates the hollow part on the frequency selective structure 100 in a third direction d₃, and is arranged on the shielding shell 200 in the mounting channel 101. The first direction d₁, the second direction d₂, and the third direction d₃ intersect each other.

In some embodiments of this application, the first direction d₁, the second direction d₂, and the third direction d₃ are perpendicular to each other.

In some implementations, the first direction d₁ may be a positive direction of an x axis, the second direction d₂ may be a positive direction of a y axis, and the third direction d₃ may be a negative direction of a z axis. In some other alternative implementations, the first direction d₁ may be a negative direction of an x axis, and/or the second direction d₂ may be a negative direction of a y axis, and/or the third direction d₃ may be a negative direction of a z axis. This is not specifically limited in this application.

For ease of understanding, the following uses an example in which in an antenna system, a positive direction of an x axis, a positive direction of a y axis, and a positive direction of a z axis are perpendicular to each other, the positive direction of the z axis is perpendicular to an array plane, a first direction d₁ is the positive direction of the x axis, a second direction d₂ is the positive direction of the y axis, and a third direction d₃ is a negative direction of the z axis for description.

In addition, in some embodiments of this application, a layout channel (not shown in the figure) is further formed on the frequency selective structure 100. The layout channel connects the external surface of the frequency selective structure 100 and the channel surface of the mounting channel 101. Antenna elements in the first antenna array 20 penetrate the layout channel from outside of the frequency selective structure 100 and are then arranged on the shielding shell 200 in the mounting channel 101.

The following describes in detail a specific structure of a frequency selective architecture 10 with reference to the following several application scenarios.

### Application scenario 1

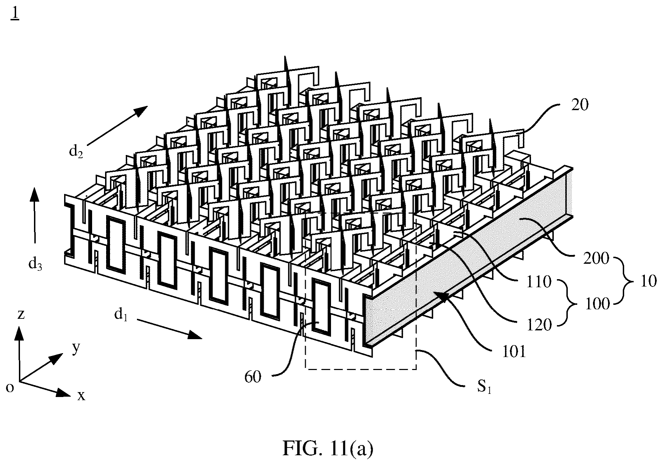

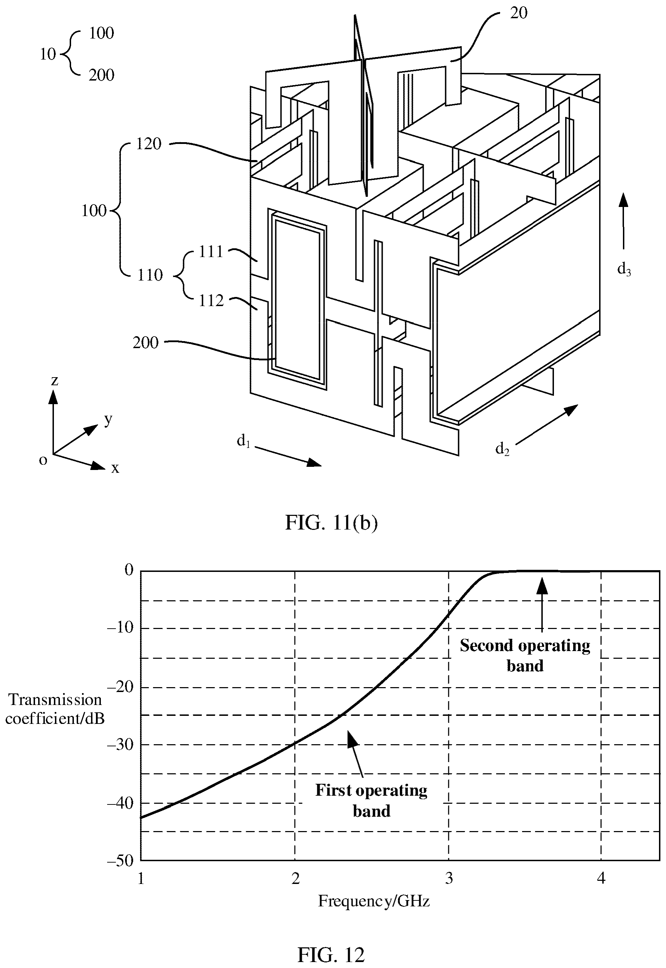

In the application scenario 1, in the frequency selective architecture 10, the frequency selective structure 100 is a mesh structure, the mounting channel 101 is strip space, and the shielding shell 200 is in a strip structure that adapts to the mounting channel 101. That the frequency selective structure 100 is the mesh structure means that the frequency selective units in the frequency selective structure 100 are distributed in mesh space, and forms of the frequency selective units in the frequency selective structure 100 are not specifically limited. The following describes specific structures of some frequency selective architectures 10 applicable to the application scenario 1 with reference to FIG. 11(a) and FIG. 11(b). FIG. 11(a) is a diagram of a structure of an antenna system 1 in some embodiments applicable to the application scenario 1. FIG. 11(b) is a partial enlargement view of an area S₁ in FIG. 11(a). With reference to FIG. 11(a) and FIG. 11(b), it can be learned that, in some embodiments of this application, the frequency selective architecture 10 includes a frequency selective structure 100 and a shielding shell 200. The frequency selective structure 100 includes at least two groups of first frequency selective units 110. Each group of first frequency selective units 110 are provided with mounting openings (not shown). Several groups of first frequency selective units 110 are distributed in parallel in an extension direction of a mounting channel 101, to form at least two mounting channels 101 by using the mounting opening. The shielding shell 200 is distributed in the mounting channel 101 formed by the first frequency selective unit 110. In some implementations, the first frequency selective unit 110 is connected to the shielding shell 200 through the mounting opening.

In some embodiments of this application, the at least two groups of first frequency selective units 110 are of a planar two-dimensional structure, and a distribution plane of each group of first frequency selective units 110 intersects the extension direction of the mounting channel 101. For example, the distribution plane of each group of first frequency selective units 110 is perpendicular to the extension direction of the mounting channel 101.

The following provides description by using an example in which the at least two groups of first frequency selective units 110 are of a planar two-dimensional structure, the extension direction of the mounting channel 101 is a second direction d₂, and a distribution plane of each group of first frequency selective units 110 is perpendicular to the second direction d₂.

In some implementations, as shown in FIG. 11(a), each mounting channel 101 includes all first frequency selective units 110. Specifically, each group of first frequency selective units 110 are provided with at least two mounting openings. When the antenna system 1 is in an assembly state, each group of first frequency selective units 110 are arranged perpendicular to the second direction d₂, several groups of first frequency selective units 110 are successively arranged in the second direction d₂, and at least two mounting openings on each group of first frequency selective units 110 are arranged opposite to each other. The at least two mounting openings that are arranged opposite to each other on several groups of first frequency selective units 110 form at least two mounting channels 101. The at least two shielding shells 200 are successively arranged in the second direction d₂, and the at least two mounting openings on each group of first frequency selective units 110 are successively clamped to surfaces of the at least two shielding shells 200.

For example, each group of first frequency selective units 110 are provided with a NO.1 mounting opening and a NO.2 mounting opening. In this way, NO.1 mounting openings on all groups of first frequency selective units 110 are successively disposed in the second direction d₂, and NO.2 mounting openings on all groups of first frequency selective units 110 are successively disposed in the second direction d₂. The NO.1 mounting openings on all groups of first frequency selective units 110 jointly form a NO.1 mounting channel 101, and NO.2 mounting ports on all groups of first frequency selective units 110 jointly form a NO.2 mounting channel 101.

In the foregoing antenna system 1, the frequency selective structure 100 includes at least two groups of first frequency selective units 110, and the at least two groups of first frequency selective units 110 are successively arranged in parallel, to form each mounting channel 101. Because the frequency selective unit in the frequency selective structure 100 is directly clamped to the shielding shell 200, the antenna system 1 is easy to assemble and disassemble, and production costs and use costs of the antenna system 1 are reduced.

In some other alternative implementations in this application, each mounting channel 101 is jointly formed by some groups of first frequency selective units 110 in several groups of first frequency selective units 110. It may be understood that a principle of forming the mounting channel 101 by some groups of first frequency selective units 110 is basically the same as a principle of forming the mounting channel 101 by all groups of first frequency selective units 110, and a difference lies in that the first frequency selective units 110 used to form the mounting channels 101 are adjusted. In other words, the first frequency selective units 110 clamped to the surface of each shielding shell 200 are adjusted, and details are not described herein.

In some embodiments of this application, each group of first frequency selective units 110 include two parts that are disposed opposite to each other, and a clamping notch is provided at a corresponding position of each part. In an assembly state, the two clamping notches on the two parts jointly form the foregoing mounting opening. For ease of understanding, the following uses one of the mounting channels 101 formed by several groups of first frequency selective units 110 in FIG. 11(a) and FIG. 11(b) as an example for detailed description.

In some implementations, as shown in FIG. 11(b), each group of first frequency selective units 110 may include a first pattern 111 and a second pattern 112 that are disposed opposite to each other. The first pattern 111 is provided with a first clamping notch (not shown), and the first clamping notch is connected to an edge that is of the first pattern 111 and that faces the second pattern 112. The second pattern 112 is provided with a second clamping notch (not shown), and the second clamping notch is connected to an edge that is of the second pattern 112 and that faces the first pattern 111.

In a state in which the first frequency selective unit 110 is assembled, the first clamping notch on the first pattern 111 is opposite to the second clamping notch on the second pattern 112, and the first clamping notch and the second clamping notch jointly form the mounting opening on the first frequency selective unit 110. In a state in which the antenna system 1 is assembled, the first pattern 111 is clamped to the surface of the shielding shell 200 in the negative direction of the z axis by using the first clamping notch, and the second pattern 112 is clamped to the surface of the shielding shell 200 in the positive direction of the z axis by using the second clamping notch.

In the foregoing antenna system 1, each group of first frequency selective units 110 include a first pattern 111 and a second pattern 112 that are disposed opposite to each other. For two split parts of the first frequency selective unit 110, it is convenient to complete assembly and disassembly of the first frequency selective unit 110 on the shielding shell 200. As a result, production costs and use costs of the antenna system 1 can be reduced, and economic benefits of the antenna system 1 can be improved.

In some other alternative implementations, each group of first frequency selective units 110 are an entirety, and clamping openings are provided on the entirety. The clamping openings are the mounting openings of each group of first frequency selective units 110. It may be understood that the clamping opening in this implementation may be closed, or may be semi-open. This is not specifically limited in this application.

In the foregoing antenna system 1, each group of first frequency selective units 110 are an entirety, so that a quantity of parts in the antenna system 1 is reduced, assembly difficulty of the antenna system 1 is reduced, assembly precision of the antenna system 1 is improved, and performance stability of the antenna system 1 is improved.

In some embodiments of this application, as shown in FIG. 11(b), in each group of first frequency selective units 110, the first pattern 111 and the second pattern 112 are distributed in a same plane. In the foregoing antenna system 1, the first frequency selective unit 110 has low design difficulty, a simple assembly process, and a short debugging period.

In some other embodiments of this application, in each group of first frequency selective units 110, the first pattern 111 and the second pattern 112 may alternatively be distributed in different planes. For example, in each group of first frequency selective units 110, the first pattern 111 and the second pattern 112 are distributed in two parallel planes. For another example, in each group of first frequency selective units 110, the first pattern 111 and the second pattern 112 are distributed in two intersecting planes. This is not specifically limited in this application.

In some embodiments of this application, as shown in FIG. 11(b), a gap is disposed between the first pattern 111 and the second pattern 112. In this embodiment, the first pattern 111 is mounted on the shielding shell 200 by using the first clamping notch, and the second pattern 112 is mounted on the shielding shell 200 by using the second clamping notch. In other words, the first pattern 111 and the second pattern 112 are disposed opposite to each other by using the shielding shell 200.

In some other embodiments of this application, the first pattern 111 and the second pattern 112 are disposed in contact with each other. In this embodiment, the first pattern 111 and the first second 112 are in direct contact to be disposed opposite to each other. For example, the first pattern 111 and the first second 112 are disposed in an abutment manner. For another example, the first pattern 111 and the first second 112 are disposed in a clamping manner. For another example, the first pattern 111 and the second pattern 112 are disposed in a bonding manner. For another example, the first pattern 111 and the second pattern 112 are disposed in a welding manner.

In some embodiments of this application, the frequency selective structure 100 includes at least two groups of second frequency selective units 120. Each group of second frequency selective units 120 are distributed in a second plane and located between two shielding shells 200. The second plane is parallel to the extension direction of the mounting channel 101, and the second frequency selective units 120 are connected to the shielding shell 200. It may be understood that the second plane in this embodiment is not a determined plane, but may be a group of parallel planes.

In some embodiments of this application, with reference to FIG. 11(a) and FIG. 11(b), it can be learned that several groups of first frequency selective units 110 and several groups of second frequency selective units 120 are arranged in an interlacing manner. For example, the distribution plane of the first frequency selective unit 110 and a distribution plane of the second frequency selective unit 120 are perpendicular to each other.

In some implementations, several groups of first frequency selective units 110 and several groups of second frequency selective units 120 jointly form the at least two mounting channels 101. It may be understood that a structure feature and a distribution manner of the first frequency selective unit 110 in this embodiment are the same as those in the foregoing embodiment, and details are not described herein. At least one group of second frequency selective units 120 are arranged between adjacent shielding shells 200.

For a connection manner between the first frequency selective unit 110 and the second frequency selective unit 120, in some implementations, a clamping opening is provided at an interlacing position that is on the first frequency selective unit 110 and that is between the first frequency selective unit 110 and the second frequency selective unit 120, and the first frequency selective unit 110 is clamped to the second frequency selective unit 120 by using the clamping opening.

In some other alternative implementations, a clamping opening is disposed at an interlacing position that is on the second frequency selective unit 120 and that is between the second frequency selective unit 120 and the first frequency selective unit 110, and the second frequency selective unit 120 is clamped to the first frequency selective unit 110 by using the clamping opening.

In some other alternative implementations, a clamping opening is disposed at each of an interlacing position that is on the first frequency selective unit 110 and that is between the first frequency selective unit 110 and the second frequency selective unit 120 and an interleaving position that is on the second frequency selective unit 120 and that is between the second frequency selective unit 120 and the first frequency selective unit 110, so that the first frequency selective unit 110 and the second frequency selective unit 120 are clamped to each other by using clamping openings.

In conclusion, with reference to FIG. 11(a) and FIG. 11(b), it is not difficult to find that the frequency selective architecture 10 in the antenna system 1 may be divided into three spatial areas in an x direction, a y direction, and a z direction. Different shielding shells 200 are disposed at a specific interval in the x direction, and a single shielding shell 200 is disposed in a direction parallel to the y direction. A first type of frequency selective subunits surround an outer wall of the shielding shell 200, and are successively repeated to form one row of first frequency selective units 110 in the x direction. Then, the one row of first frequency selective units 110 are successively repeated in the y direction, to form a plurality of rows of frequency selective structures perpendicular to the shielding shell 200. A second type of frequency selective subunit is disposed between two adjacent shielding shells 200, and a surface of the second type of frequency selective subunit is parallel to the extension direction of the shielding shell 200. The second type of frequency selective subunits are successively and periodically repeated in the y direction, to form one column of second frequency selective units. Then, the one column of second frequency selective units are periodically repeated in the x direction at a specific unit spacing, to form a plurality of columns of second frequency selective units 120 parallel to the feed network. The frequency selective unit may be a metal pattern that is attached to a dielectric substrate. The first frequency selective units 110 parallel to the x direction include a series of patterns designed with groove structures, and the second frequency selective units 120 parallel to the y direction include 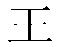 (a Chinese character that means king)-shaped patterns with adjacent horizontal line patterns above and below. The first antenna array 20 including a plurality of antenna elements is disposed on an upper surface of the shielding shell 200 (that is, the feed network).

FIG. 12 shows an electromagnetic filtering response characteristic curve of a frequency selective architecture 10 in the antenna system 1 corresponding to FIG. 11(a) and FIG. 11(b) according to some embodiments of this application. A horizontal axis represents frequency of an electromagnetic wave, and a unit is GHz. A vertical axis represents a transmission coefficient of an electromagnetic wave of a signal, and a unit is dB. It can be learned from FIG. 12 that the first operating band is 1 GHz to 3.2 GHz, and the second operating band is 3.2 GHz to 4.3 GHz. It can be seen from the curve that: in the first operating band (1 GHz to 3.2 GHz), a transmission coefficient value of the electromagnetic wave of the antenna system 1 is low, and a reflection effect is good; and in the second operating band (3.2 GHz to 4.3 GHz), a transmission coefficient value of the electromagnetic wave of the antenna system 1 is high, and a transmission effect is good. Based on this, the frequency selective architecture 10 in the antenna system 1 may reflect an electromagnetic wave in a specific frequency band (for example, the first operating band) and transmit an electromagnetic wave in another specific frequency band (for example, the second operating band).

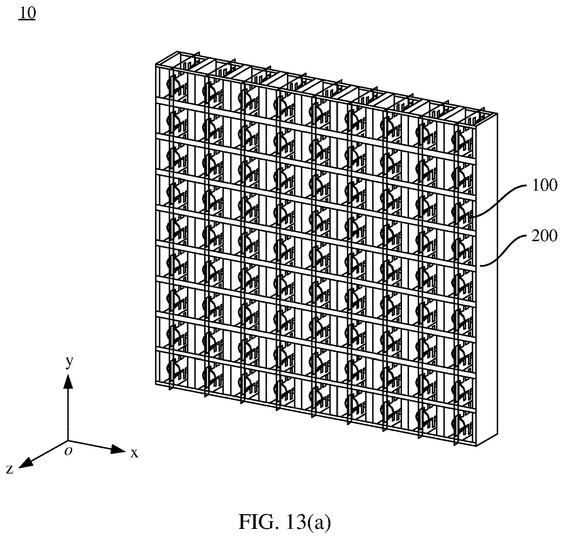

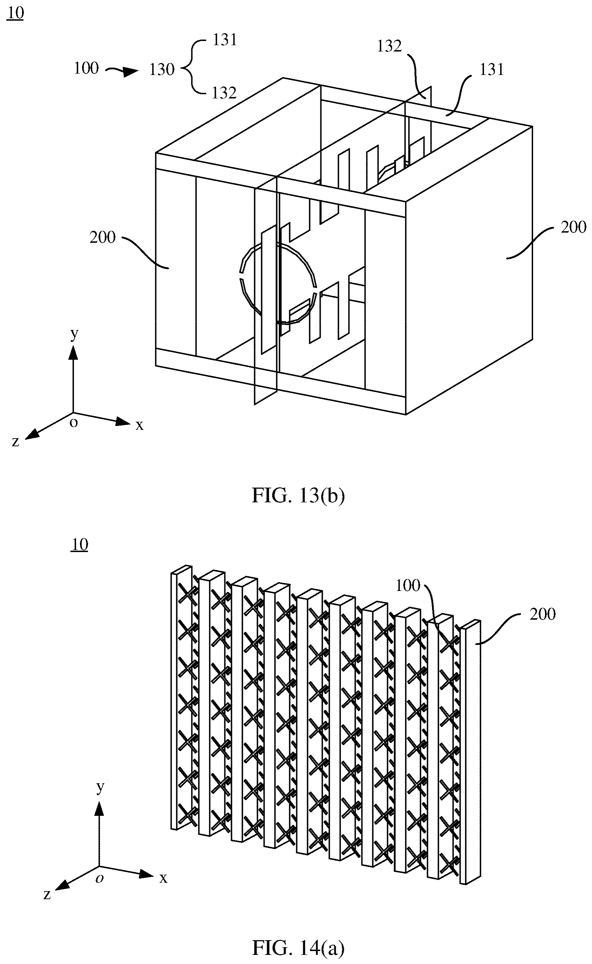

The following describes specific structures of some other frequency selective architectures 10 applicable to the application scenario 1 with reference to FIG. 13(a) and FIG. 13(b). FIG. 13(a) is a diagram of a structure of a frequency selective architecture 10 in some other embodiments applicable to the application scenario 1. FIG. 13(b) shows a structure of one unit of the frequency selective architecture 10 in FIG. 13(a). With reference to FIG. 13(a) and FIG. 13(b), it can be learned that, in some embodiments of this application, the frequency selective architecture 10 includes a frequency selective structure 100 and a shielding shell 200. The frequency selective structure 100 includes a third frequency selective unit 130. The third frequency selective unit 130 includes a third pattern 131 and a fourth pattern 132. The third pattern 131 is parallel to an array plane, and is connected to the shielding shell 200. The fourth pattern 132 is distributed between two adjacent shielding shells 200, and is connected to the third pattern 131.

In some implementations, as shown in FIG. 13(b), there are two third patterns 131. The two third patterns 131 are respectively distributed on two opposite sides of the shielding shell 200, and the fourth pattern 132 is respectively clamped to the two third patterns 131.

### Application scenario 2

In the application scenario 2, in the frequency selective architecture 10, the frequency selective structure 100 is a plurality of strip structures, the mounting channel 101 is strip space, and the shielding shell 200 is in a strip structure that adapts to the mounting channel 101. That the frequency selective structure 100 is the plurality of strip structures means that the frequency selective structure 100 is distributed in a plurality of strip space, and forms of the frequency selective units in the frequency selective structure 100 are not specifically limited.

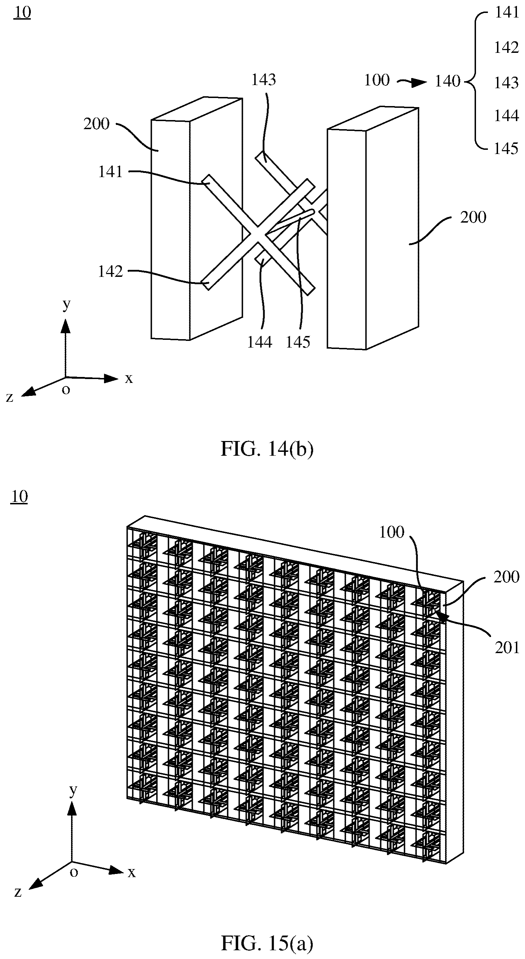

The following describes specific structures of some frequency selective architectures 10 applicable to the application scenario 2 with reference to FIG. 14(a) and FIG. 14(b). FIG. 14(a) is a diagram of a structure of a frequency selective architecture 10 in some embodiments applicable to an application scenario 2. FIG. 14(b) is an enlargement view of one composition unit of the frequency selective architecture 10 in FIG. 14(a). As shown in FIG. 14(a) and FIG. 14(b), the frequency selective architecture 10 includes a frequency selective structure 100 and a shielding shell 200. The frequency selective structure 100 is a plurality of strip structures, and a mounting channel 101 is formed between two adjacent strip structures. The shielding shell 200 is in a strip structure and is distributed in the mounting channel 101.

In some embodiments of this application, the frequency selective structure 100 may be a sheet-like frequency selective unit distributed in strip space. Alternatively, the frequency selective structure 100 may be a plurality of composition units distributed in the strip space shown in FIG. 14(b).

It can be learned from FIG. 14(a) and FIG. 14(b) that, in some embodiments of this application, in the antenna system 1, periods of the composition units in the frequency selective structure 100 in the frequency selective architecture 10 are distributed in a topology direction, that is, are distributed in arrays periodically. For example, in the frequency selective architecture 10, a ±45° polarization design solution is used for a pattern of the composition units in the frequency selective structure 100. For another example, a 0/90° polarization design solution is used for a pattern of the composition units in the frequency selective structure 100. ±45° may be in a xoy plane, and a positive direction of a y axis is used as a reference. The following uses this as an example for detailed description.

In some implementations, the frequency selective structure 100 of each strip structure includes several fourth frequency selective units 140 disposed between two adjacent mounting channels 101. As shown in FIG. 14(b), the fourth frequency selective unit 140 includes a fifth pattern 141, a sixth pattern 142, a seventh pattern 143, and an eighth pattern 144 that are parallel to the array plane, and a connecting piece 145. The fifth pattern 141 and the seventh pattern 143 extend in a -45° direction, the sixth pattern 142 and the eighth pattern 144 extend in a +45° direction, the fifth pattern 141 and the sixth pattern 142 are cross-connected, the seventh pattern 143 and the eighth pattern 144 are cross-connected, and an intersection position of the fifth pattern 141 and the sixth pattern 142 is connected to an intersection position of the seventh pattern 143 and the eighth pattern 144 by using the connecting piece 145.

### Application scenario 3

In the application scenario 3, in the frequency selective architecture 10, the frequency selective structure 100 is a plurality of block structures distributed in arrays, the mounting channel 101 is mesh space, and the shielding shell 200 is in a mesh structure that adapts to the mounting channel 101. That the frequency selective structure 100 is the plurality of block structures distributed in arrays means that the frequency selective structure 100 is distributed in a plurality of block space distributed in arrays, and forms of the frequency selective units in the frequency selective structure 100 are not specifically limited.

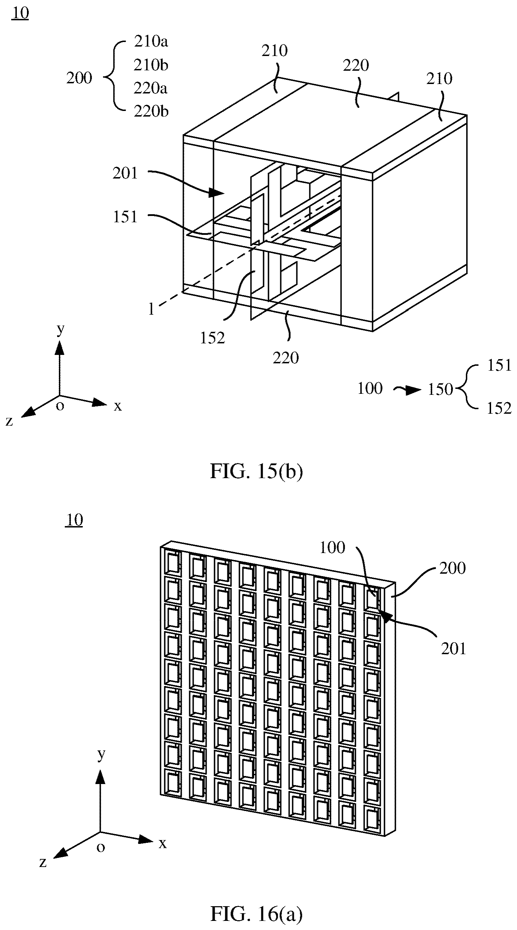

The following describes specific structures of some frequency selective architectures 10 applicable to the application scenario 3 with reference to FIG. 15(a) and FIG. 15(b). FIG. 15(a) is a diagram of a structure of a frequency selective architecture 10 in some embodiments applicable to an application scenario 3. FIG. 15(b) is a diagram of a structure of one composition unit of the frequency selective architecture 10 in FIG. 15(a). In some embodiments of this application, as shown in FIG. 15(b), the frequency selective architecture 10 includes a frequency selective structure 100 and a shielding shell 200. The frequency selective structure 100 includes a plurality of fifth frequency selective units 150, a mounting channel 101 formed by the plurality of fifth frequency selective units 150 is in a mesh structure, and the shielding shell 200 is in a mesh structure that adapts to the mounting channel 101. The plurality of fifth frequency selective units 150 are located at a mesh 201 in the mesh structure of the shielding shell 200.

In some implementations, as shown in FIG. 15(b), the fifth frequency selective unit 150 includes a ninth pattern 151 and a tenth pattern 152 that are not coplanar. The ninth pattern 151 and the tenth pattern 152 are cross-connected and clamped to each other. For ease of description, a line at which the ninth pattern 151 and the tenth pattern 152 are cross-connected is defined as a cross line 1. The cross line 1 may be parallel to the extension direction of the mounting channel 101.

In some embodiments of this application, the frequency selective structure 100 is connected to the shielding shell 200. For example, the fifth frequency selective unit 150 is connected to a mesh surface of the mesh 201. As shown in FIG. 15(b), the shielding shell 200 includes a primary shell 210 and a secondary shell 220, where the secondary shell 220 is connected to the primary shell 210. Two sides of the ninth pattern 151 extending along the cross line 1 are respectively connected to two adjacent primary shells 210, and/or two sides of the tenth pattern 152 extending along the cross line 1 are respectively connected to two adjacent secondary shells 220 between the two adjacent primary shells 210.

In some other embodiments of this application, the frequency selective structure 100 is not connected to the shielding shell 200. For example, the fifth frequency selective unit 150 is suspended in the mesh 201. For another example, the fifth frequency selective unit 150 is mounted in the mesh 201 in the shielding shell 200 by using an intermediate component.

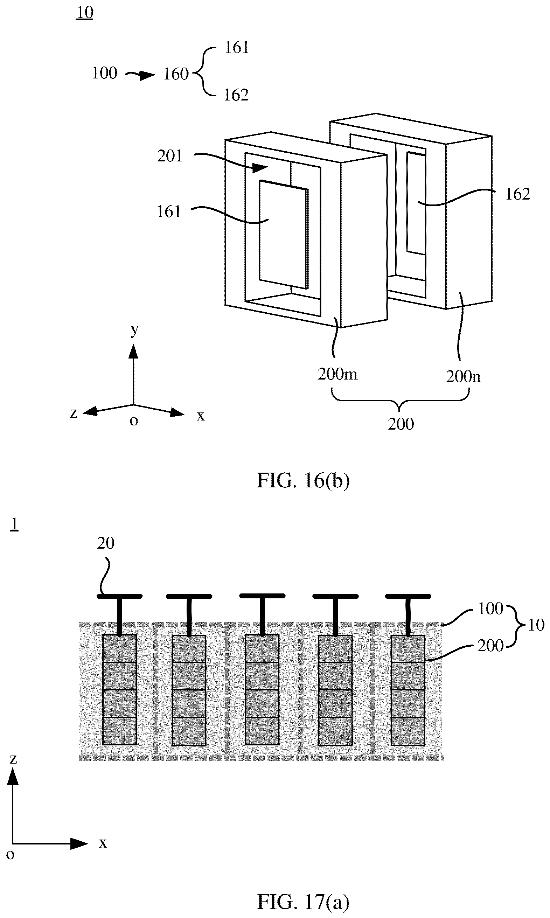

The following describes specific structures of some other frequency selective architectures 10 applicable to the application scenario 3 with reference to FIG. 16(a) and FIG. 16(b). FIG. 16(a) is a diagram of a structure of a frequency selective architecture 10 in some other embodiments applicable to an application scenario 3. FIG. 16(b) is an enlargement view of one composition unit of the frequency selective architecture 10 in FIG. 16(a). In some embodiments of this application, as shown in FIG. 16(a) and FIG. 16(b), the frequency selective architecture 10 includes a frequency selective structure 100 and a shielding shell 200. The frequency selective structure 100 includes a plurality of sixth frequency selective units 160, a mounting channel 101 formed by the plurality of sixth frequency selective units 160 is in a mesh structure, and the shielding shell 200 is in a mesh structure that adapts to the mounting channel 101. The plurality of sixth frequency selective units 160 are located at a mesh 201 in the mesh structure of the shielding shell 200.

In some embodiments of this application, as shown in FIG. 16(a) and FIG. 16(b), the sixth frequency selective unit 160 includes an eleventh pattern 161 and a twelfth pattern 162 that are perpendicular to a third direction, and in an assembly state, the eleventh pattern 161 and the twelfth pattern 162 are opposite to each other in positions. In some implementations, the eleventh pattern 161 and the twelfth pattern 162 are fastened to each other.

In some embodiments of this application, as shown in FIG. 16(a) and FIG. 16(b), the shielding shell 200 includes a first shell 200m and a second shell 200n. In an assembly state, the first shell 200m and the second shell 200n are fastened to each other in the third direction, and the first shell 200m and the second shell 200n jointly form a cavity used to accommodate a signal transmission network 60.

It should be noted that this implementation is a design solution that limits an external structure of the shielding shell 200, that is, the first shell 210m and the second shell 220n, and does not involve an internal structure of the shielding shell 200. A design solution of the internal structure of the shielding shell 200 is not specifically limited in this application.

In the antenna system 1, in the frequency selective architecture 10, the shielding shell 200 is designed as the first shell 200m and the second shell 200n that are fastened to each other, to facilitate assembly of the signal transmission network 60 in the shielding shell 200, reduce production costs and use costs of the antenna system 1, and improve overall economic benefits.

It may be understood that the first pattern 111, the second pattern 112, the third pattern 131, the fourth pattern 132, the fifth pattern 141, the sixth pattern 142, the seventh pattern 143, the eighth pattern 144, the ninth pattern 151, the tenth pattern 152, the eleventh pattern 161, and the twelfth pattern 162 in this application may all be planar patterns. These patterns may be printed circuit boards, or may be frequency selective surfaces formed through PEP molding, sheet metal molding, or welding (for example, laser welding). This is not specifically limited in this application.

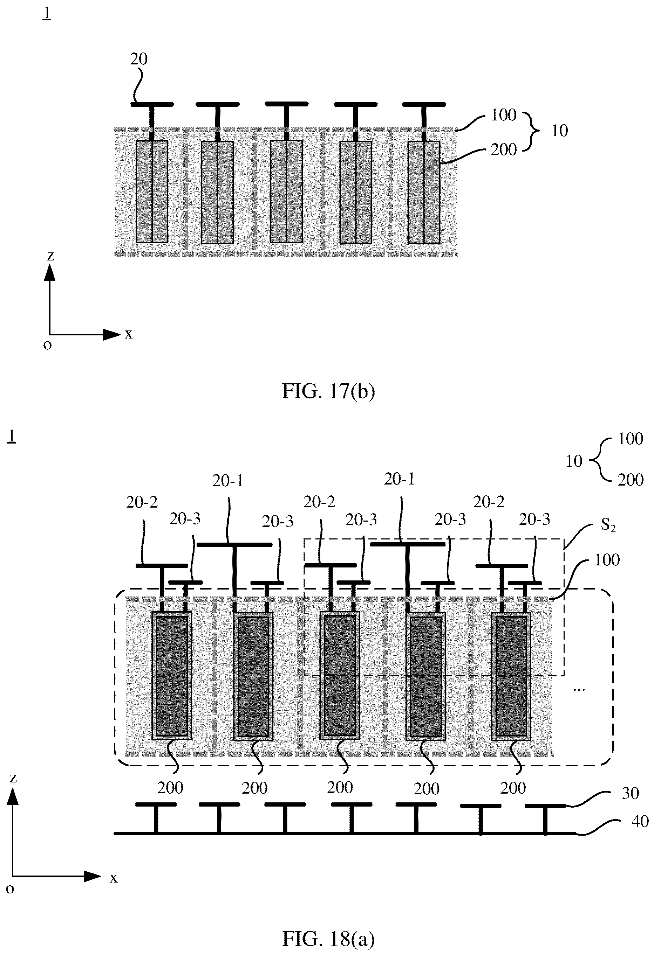

FIG. 17(a) is a diagram of an antenna system 1 according to some embodiments of this application. FIG. 17(b) is a diagram of an antenna system 1 according to some other embodiments of this application.

As shown in FIG. 17(a) and FIG. 17(b), in some embodiments of this application, one shielding shell 200 in the mounting channel 101 may be disposed in a division cavity. As shown in FIG. 17(a), the shielding shell 200 may be disposed in a division cavity transversely. In other words, each shielding shell 200 includes at least two first division cavities, and the at least two first division cavities are arranged in the third direction. As shown in FIG. 17(b), the shielding shell 200 may be disposed in a division cavity longitudinally. Each shielding shell 200 includes at least two second division cavities, and the at least two second division cavities are arranged in a vertical direction of the third direction. This is not specifically limited herein.

### Application Scenario 4

In the application scenario 4, the first antenna array 20 includes a plurality of groups of first antenna arrays 20. The antenna system 1 may be compatible with the first antenna arrays 20 of a plurality of frequency bands.

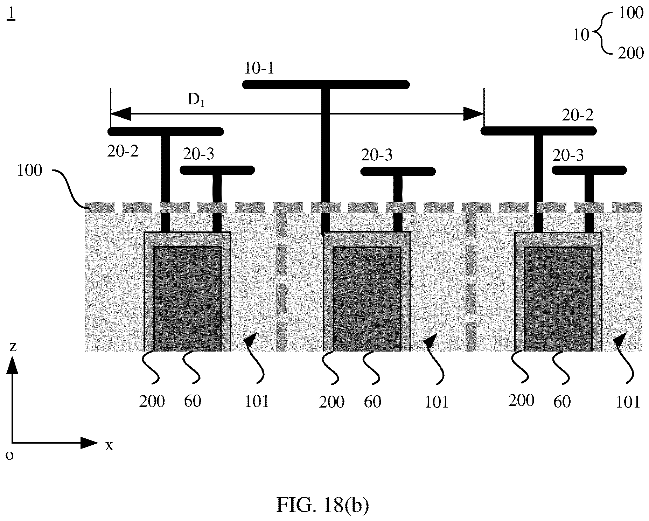

In some embodiments of this application, the first antenna arrays 20 specifically include at least two groups of first antenna arrays 20. Each group of first antenna arrays 20 correspond to different operating bands, and operating bands corresponding to each group of first antenna arrays 20 are sub frequency bands of the first operating band. FIG. 18(a) is a diagram of an antenna system 1 according to some embodiments of this application. FIG. 18(b) is a partial enlargement view of an area S₂ in FIG. 18(a). As shown in FIG. 18(b), in the antenna system 1, the first antenna array 20 specifically includes a first sub antenna array 20-1, a second sub antenna array 20-2, and a third sub antenna array 20-3. It may be understood that the first sub antenna array 20-1 corresponds to a first operating sub-band, the second sub antenna array 20-2 corresponds to a second operating sub-band, and the third sub antenna array 20-3 corresponds to a third operating sub-band. In other words, the first sub antenna array 20-1, the second sub antenna array 20-2, and the third sub antenna array 20-3 correspond to different operating sub-bands. It should be noted that operating sub-bands (that is, the first operating sub-band, the second operating sub-band, and the third operating sub-band) corresponding to the first sub antenna array 20-1, the second sub antenna array 20-2, and the third sub antenna array 20-3 are all within a range of the first operating band.

In some embodiments of this application, a spacing period between the frequency selective structure 100 and the antenna elements in each group of first antenna arrays 20 meet a specific quantization relationship (namely, a multiple relationship), so that the antenna system 1 can be compatible with different frequency band design requirements. For example, the antenna system 1 is compatible with antenna element designs of frequency bands such as 1,800 M, 2,100 M, and 2,600 M.

In some embodiments of this application, distances between two adjacent antenna elements in each group of first antenna arrays 20 are the same, and are positively correlated with a wavelength of an electromagnetic wave corresponding to the group of first antenna arrays 20. The following uses the first sub antenna array 20-1 in the first antenna array 20 for description. The first sub antenna array 20-1 includes a plurality of first antenna elements, distances (for example, D1 in FIG. 18(b)) between two adjacent first antenna elements are the same, and the distances are positively correlated with a wavelength of an electromagnetic wave corresponding to the first operating sub-band corresponding to the first sub antenna array 20-1.

In some implementations, a distance between two adjacent first antenna arrays 20 in each group of first antenna arrays 20 is equal to a half wavelength of an electromagnetic wave corresponding to the group of first antenna arrays 20. The following continues to use the first sub antenna array 20-1 in the first antenna array 20 for description. A distance between two adjacent first antenna elements is a half wavelength of an electromagnetic wave corresponding to the first operating sub-band corresponding to the first sub antenna array 20-1.

It may be understood that, because the first sub antenna array 20-1 corresponds to an electromagnetic wave in an operating band, that is, the first sub antenna array 20-1 corresponds to an electromagnetic wave in a frequency band range, a half wavelength is actually a value range. In other words, a distance between two adjacent first antenna elements in each group of first sub antenna arrays 20-1 may be a value within a corresponding value range. For example, the distance between two adjacent first antenna elements in the first sub antenna array 20-1 may be a half wavelength of a center frequency of the operating band corresponding to the first sub antenna array 20-1. It may be understood that, in this application, the first sub antenna array 20-1 is arranged on the shielding shell 200. Therefore, the distance between two adjacent first antenna elements further needs to be appropriately adjusted based on a position and a size of the shielding shell 200. In addition, in this application, the first antenna array 20 may include a plurality of groups of first antenna arrays 20. Therefore, a distance between two adjacent first antenna elements in each group of first antenna arrays 20 further needs to be comprehensively adjusted with reference to a layout manner of the plurality of groups of first antenna arrays 20.

In some other alternative implementations, the distance between the first antenna arrays 20 is equal to any one of a one-eighth wavelength, a quarter wavelength, or a wavelength of the electromagnetic wave corresponding to the first antenna array 20. Details are not described herein.

In some implementations, a spacing between the frequency selective structure 100 and the antenna elements in each group of first antenna arrays 20 may be designed from two aspects: a vertical plane and a horizontal plane. The antenna elements on the same horizontal plane may be antenna elements of a same frequency band, and the antenna elements on the same vertical plane may be antenna elements in the same first antenna array 20 or antenna elements on the same shielding shell 200.

It may be understood that a ratio of an actual period of the first antenna array 20 to a spacing period of the shielding shell 200 may not be an integer multiple, or the actual period of the first antenna array 20 and the spacing period of the shielding shell 200 may even be unequal. In an x axis direction, a plurality of antenna elements may be disposed on a surface of a single shielding shell 200, and the plurality of antenna elements may correspond to different operating bands. A corresponding spacing between antenna elements may be set based on a specific frequency band. This is not specifically limited in this application.

The following continues to describe a correspondence between the shielding shell 200 and the signal transmission network 60 in the antenna system 1.

In some embodiments of this application, in the antenna system 1, the shielding shell 200 specifically includes at least two shielding shells 200, and a signal transmission network 60 is disposed in at least one of the at least two shielding shells 200.

In some implementations, in the antenna system 1, the shielding shell 200 specifically includes at least two shielding shells 200, a signal transmission network 60 is disposed in some shielding shells 200, and no signal transmission network 60 is disposed in the remaining shielding shells 200. The shielding shell without a signal transmission network may be a "dummy structure".

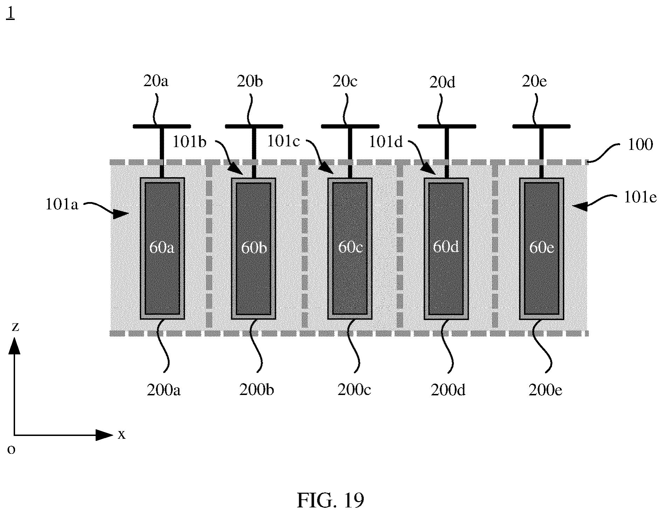

The following provides descriptions with reference to the accompanying drawings. FIG. 19 is a diagram of an antenna system 1 according to some embodiments of this application. As shown in FIG. 19, in the antenna system 1, there are five shielding shells, and the five shielding shells specifically include a shielding shell 200a, a shielding shell 200b, a shielding shell 200c, a shielding shell 200d, and a shielding shell 200e. There are five signal transmission networks, and the five signal transmission networks specifically include a signal transmission network 60a, a signal transmission network 60b, a signal transmission network 60c, a signal transmission network 60d, and a signal transmission network 60e. The signal transmission network 60a is arranged in the shielding shell 200a, the signal transmission network 60b is arranged in the shielding shell 200b, the signal transmission network 60c is arranged in the shielding shell 200c, the signal transmission network 60d is arranged in the shielding shell 200d, and the signal transmission network 60e is arranged in the shielding shell 200e.

It is not difficult to learn that one signal transmission network is arranged in each shielding shell in FIG. 19. However, this only shows one layout manner of the shielding shell and the signal transmission network. In this application, when a signal transmission network is disposed in each shielding shell, a quantity of signal transmission networks disposed in each shielding shell is not specifically limited in this application.

In some other alternative implementations, in the antenna system 1, the shielding shell 200 specifically includes at least two shielding shells 200, a signal transmission network 60 is disposed in some shielding shells 200, and no signal transmission network 60 is disposed in the remaining shielding shells 200.

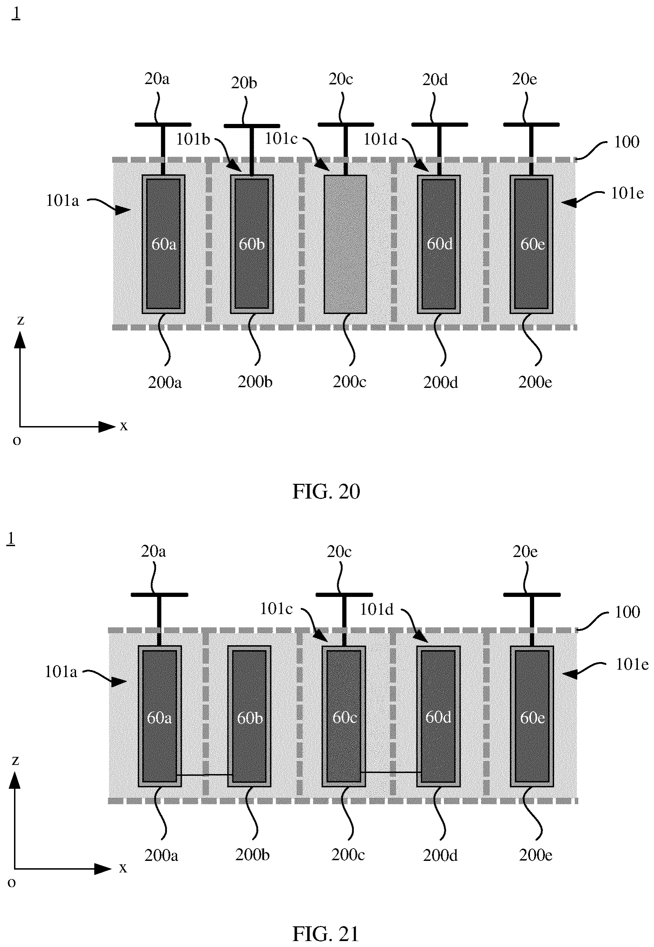

The following provides descriptions with reference to the accompanying drawings. FIG. 20 is a diagram of an antenna system 1 according to some embodiments of this application. Compared with FIG. 19, a difference between the antenna system 1 shown in FIG. 20 and that in FIG. 19 lies in that there are four signal transmission networks in FIG. 20, and the four signal transmission networks specifically include a signal transmission network 60a, a signal transmission network 60b, a signal transmission network 60d, and a signal transmission network 60e. The signal transmission network 60a is arranged in the shielding shell 200a, the signal transmission network 60b is arranged in the shielding shell 200b, the signal transmission network 60d is arranged in the shielding shell 200d, the signal transmission network 60e is arranged in the shielding shell 200e, and no signal transmission network is arranged in the shielding shell 200c.

It is not difficult to learn that one signal transmission network is arranged in each of the four shielding shells in FIG. 20, and no signal transmission network is arranged in another shielding shell. However, this only shows one layout manner of the shielding shell and the signal transmission network. In this application, when signal transmission networks are disposed in some shielding shells and no signal transmission network is disposed in the remaining shielding shells, a quantity of signal transmission networks disposed in the some shielding shells is not specifically limited in this application.

It may be understood that, in some implementations, as shown in FIG. 20, no first antenna array is disposed on the shielding shell 200c. In some other alternative implementations, a first antenna array may alternatively be disposed on the shielding shell 200c. This is not specifically limited in this application.

After the correspondence between the shielding shell 200 and the signal transmission network 60 is described, the following continues to describe a correspondence between the shielding shell 200 and the first antenna array 20 in the antenna system 1.

In some embodiments of this application, in the antenna system 1, the shielding shell 200 specifically includes at least two shielding shells 200, and a first antenna array 20 is arranged on at least one of the at least two shielding shells 200.

In some implementations, in the antenna system 1, the shielding shell 200 specifically includes at least two shielding shells 200, and a first antenna array 20 is correspondingly arranged in each shielding shell 200.

The following provides descriptions with reference to FIG. 19. With reference to FIG. 19, in addition to the foregoing descriptions, in the antenna system 1, the first antenna array may include five partition antenna arrays. It may be understood that the partition antenna array may include one column and a plurality of rows of antenna elements. The five partition antenna arrays specifically include a first antenna array 20a, a first antenna array 20b, a first antenna array 20c, a first antenna array 20d, and a first antenna array 20e. The first antenna array 20a is arranged on the shielding shell 200a, the first antenna array 20b is arranged on the shielding shell 200b, the first antenna array 20c is arranged on the shielding shell 200c, the first antenna array 20d is arranged on the shielding shell 200d, and the first antenna array 20e is arranged on the shielding shell 200e.

In the foregoing antenna system 1, a first antenna array is arranged on each shielding shell. In this way, the shielding shell in the antenna system 1 is fully used, so that an operating band corresponding to the antenna system 1 is easily extended, and use performance of the antenna system 1 is easily optimized.

It is not difficult to learn that one first antenna array is arranged on each shielding shell in FIG. 19. However, this only shows one layout manner of the shielding shell and the first antenna array. It is not difficult to understand that, in this application, when a first antenna array is arranged on each shielding shell, a quantity of first antenna arrays arranged on each shielding shell is not specifically limited in this application.

In some other alternative implementations, in the antenna system 1, the shielding shell 200 specifically includes at least two shielding shells 200, a first antenna array 20 is correspondingly arranged on some shielding shells 200, and no first antenna array 20 is arranged on the remaining shielding shells 200.

The following provides descriptions with reference to the accompanying drawings. FIG. 21 is a diagram of an antenna system 1 according to some embodiments of this application. Compared with FIG. 19, a difference between the antenna system 1 shown in FIG. 21 and that in FIG. 19 lies in that there are four first antenna arrays in FIG. 21, and the four first antenna arrays specifically include a first antenna array 20a, a first antenna array 20b, a first antenna array 20c, and a first antenna array 20e. The first antenna array 20a is arranged on the shielding shell 200a, the first antenna array 20b is arranged on the shielding shell 200b, the first antenna array 20c is arranged on the shielding shell 200c, the first antenna array 20e is arranged on the shielding shell 200e, and no antenna array is arranged on the shielding shell 200d.

In some application scenarios, as shown in FIG. 21, the signal transmission network 60d is disposed in the shielding shell 200d, and the signal transmission network 60d is cascaded to the signal transmission network 60c. The first antenna array 20c is connected to the signal transmission network 60c in the shielding shell 200c, and is further connected to the signal transmission network 60d in the shielding shell 200d. In other words, the first antenna array 20c, the signal transmission network 60c, and the signal transmission network 60d form a combination circuit.

In some other application scenarios, no signal transmission network is disposed in the shielding shell 200d, and the shielding shell 200c in the antenna system 1 is a reserved shielding cavity. The first antenna array and the signal transmission network may be disposed in the cavity based on a requirement. This is not specifically limited in this application.

In the foregoing antenna system 1, the first antenna array is arranged on some shielding shells, and no first antenna array is arranged on the remaining shielding shells. In this way, it is convenient to directly supplement a new antenna array to the antenna system 1 subsequently, to more flexibly extend an operating band corresponding to the antenna system 1 based on changing requirements, prolong a use period of the antenna system 1, and reduce use costs of the antenna system.

It is not difficult to learn that one first antenna array is arranged in each of the four shielding shells in FIG. 21, and no first antenna array is arranged in another shielding shell. However, this only shows one layout manner of the shielding shell and the first antenna array. It is not difficult to understand that, in this application, if the first antenna arrays are disposed in some shielding shells and no first antenna array is disposed in the remaining shielding shells, there may be any quantity of first antenna arrays disposed in the some shielding shells. A correspondence between the shielding shell and the first antenna array may be randomly adjusted, and may be specifically adjusted based on an actual design or production requirement. This is not specifically limited in this application.

In conclusion, based on the correspondence between the mounting channel 101 and the shielding shell 200, the correspondence between the shielding shell 200 and the signal transmission network 60, and the correspondence between the shielding shell 200 and the first antenna array 20, it is not difficult to learn that in the antenna system 1 of this application, there may be any quantity of mounting channels 101, shielding shells 200, signal transmission networks 60, and first antenna arrays 20 in the frequency selective structure 100, and an arrangement manner may be diversified, and may be specifically adjusted based on an actual design or production requirement. This is not specifically limited in this application.

In this application, the first operating band corresponding to the first antenna array 20 is different from the second operating band corresponding to the second antenna array 30. Therefore, the first antenna array 20 and the second antenna array 30 may be antenna arrays of different generations. For example, the first antenna array is a 5G antenna array, and the second antenna array is a 4G antenna array. For another example, the first antenna array is a 5G antenna array, and the second antenna array is a 5G antenna array. For another example, the first antenna array is a 4G antenna array, and the second antenna array is a 4G antenna array. This is not specifically limited in this application.

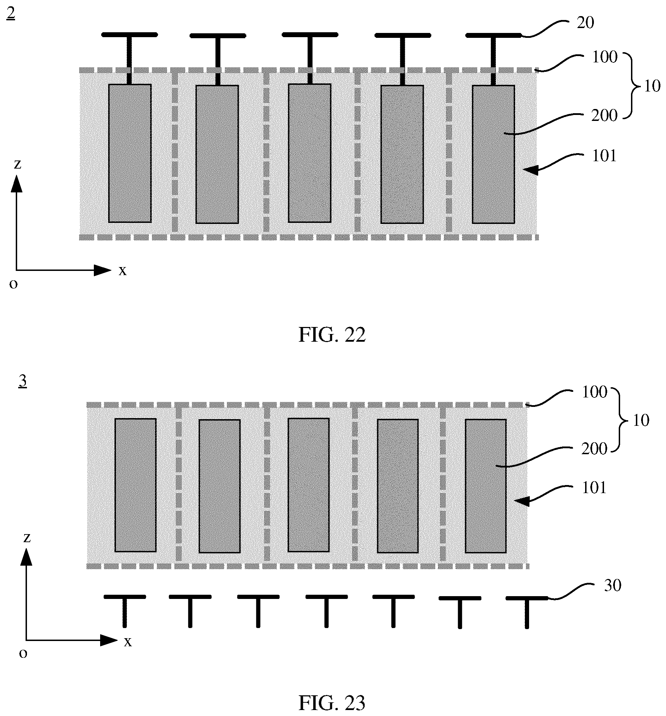

In addition, this application further provides an antenna system 2. FIG. 22 is a diagram of an antenna system 2 according to some embodiments of this application. As shown in FIG. 22, in some embodiments of this application, the antenna system 2 includes a frequency selective architecture 10 and a first antenna array 20. The frequency selective architecture 10 and the first antenna array 20 are arranged opposite to each other in a third direction. The first antenna array 20 corresponds to a first operating band. The frequency selective architecture 10 is capable of reflecting an electromagnetic wave of the first operating band and transmitting an electromagnetic wave of a second operating band. The first operating band is different from the second operating band. The frequency selective architecture 10 includes a frequency selective structure 100 and a shielding shell 200. The shielding shell 200 is mounted on the frequency selective structure 100. The first antenna array 20 is connected to the shielding shell 200 in the frequency selective architecture 10. It should be noted that the frequency selective architecture 10 in the antenna system 2 is the same as the frequency selective architecture 10 in the antenna system 1, and the first antenna array 20 in the antenna system 2 is the same as the first antenna array 20 in the antenna system 1. Details are not described herein.

The antenna system 2 includes the frequency selective architecture 10 and the first antenna array 20. A second antenna array 30 and a reflector plate 40 may be modules in an original base station. The antenna system 2 may be directly mounted on the original base station, to implement update of the original base station, reduce use costs of the base station, and improve overall economic benefits. For other functions of the antenna system 2, refer to the description of the antenna system 1. Details are not described herein.

In addition, this application further provides an antenna system 3. FIG. 23 is a diagram of an antenna system 3 according to some embodiments of this application. As shown in FIG. 23, this application further provides the antenna system 3. The antenna system 3 includes a frequency selective architecture 10 and a second antenna array 30. The second antenna array 30 corresponds to a second operating band, and the frequency selective architecture 10 is capable of reflecting an electromagnetic wave of a first operating band and transmitting an electromagnetic wave of the second operating band. The first operating band is different from the second operating band. The frequency selective architecture 10 includes a frequency selective structure 100 and a shielding shell 200. The frequency selective structure 100 forms a mounting channel 101, and the shielding shell 200 is located in the mounting channel 101. It should be noted that the frequency selective architecture 10 in the antenna system 3 is the same as the frequency selective architecture 10 in the antenna system 1, and the second antenna array 30 in the antenna system 3 is the same as the second antenna array 30 in the antenna system 1. Details are not described herein.

The antenna system 3 includes the frequency selective architecture 10 and the second antenna array 30. A first antenna array 20 and a reflector plate 40 may be modules in an original base station. The antenna system 3 may be mounted on the original base station, to implement update of the original base station, reduce use costs of the base station, and improve overall economic benefits. For other functions of the antenna system 3, refer to the description of the antenna system 1. Details are not described herein.

This application further provides a base station, where the base station includes a radio frequency module and the foregoing antenna system, and the radio frequency module is connected to the antenna system. The antenna system may be any one of the antenna system 1, the antenna system 2, and the antenna system 3, and details are not described herein.

This application further provides a frequency selective architecture 10. The frequency selective architecture 10 is capable of reflecting an electromagnetic wave of a first operating band and transmitting an electromagnetic wave of a second operating band. The first operating band is different from the second operating band. The frequency selective architecture 10 includes a frequency selective structure 100 and a shielding shell 200. The shielding shell 200 is mounted on the frequency selective structure 100, and the shielding shell 200 is configured to connect to the first antenna array 20. In other words, in the foregoing frequency selective architecture, before assembly, the shielding shell 200 is used as a part of the frequency selective architecture, and a corresponding signal transmission network is disposed in the shielding shell 200, to implement signal transmission network hiding. For other functions of the frequency selective architecture 10, refer to descriptions in the frequency selective architecture 10 in the antenna system 1. Details are not described herein again.

It should be noted that, in this specification, similar reference numerals and letters in the following accompanying drawings represent similar items. Therefore, once an item is defined in an accompanying drawing, the item does not need to be further defined or interpreted in the following accompanying drawings.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features. In addition, terms "first" and "second" are merely used for a purpose of description, and shall not be understood as an indication or implication of relative importance. "A plurality of" means at least two.

A term "and/or" in embodiments of this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In descriptions of this application, it should be noted that orientation or position relationships indicated by terms "center", "above", "below", "left", "right", "vertical", "horizontal", "inside", "outside", and the like are orientation or position relationships based on the accompanying drawings, and are merely intended for ease of describing this application and simplifying the descriptions, rather than indicating or implying that a described apparatus or element needs to have a specific orientation or needs to be constructed and operated in a specific orientation. Therefore, such terms cannot be construed as a limitation on this application.

In descriptions of this application, it should be noted that positions or position relationships indicated by terms "center", "vertical", "horizontal", "outside", "inside", and the like are positions or position relationships based on the accompanying drawings, and are merely intended for ease of describing this application and simplifying the descriptions, rather than indicating or implying that a described apparatus or element needs to have a specific orientation or needs to be constructed and operated in a specific orientation. Therefore, such terms cannot be construed as a limitation on this application.

In descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or an internal communication between two elements. A person of ordinary skill in the art may interpret specific meanings of the foregoing terms in this application according to specific cases.

In descriptions of this application, the term "include", "comprise", or any other variant thereof is intended to cover a non-exclusive inclusion, so that a process, a method, an article, or a device that includes a series of elements not only includes those elements, but also includes another element that is not explicitly listed, or also includes an element that is inherent to the process, the method, the article, or the device. An element preceded by "includes a ..." does not, without more constraints, preclude the presence of additional identical elements in the process, method, article, or device that includes the element.

It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

The use of "some embodiments" or "an embodiment" in the specification means that particular features, structures, or characteristics described with reference to the embodiment are included in at least one example implementation solution or technology in accordance with the present disclosure. The phrase "in one embodiment" appearing in various places in the specification does not necessarily all mean a same embodiment. Although this application is described with reference to some embodiments, it does not mean that a characteristic of this application is limited only to this implementation. On the contrary, a purpose of describing this application with reference to an implementation is to cover another option or modification that may be derived based on claims of this application. To provide an in-depth understanding of this application, the foregoing descriptions include a plurality of specific details. This application may be alternatively implemented without using these details.

**In** addition, the language used in the specification is already mainly selected for readability and instructional purposes and may not be selected to depict or limit the disclosed topics. Therefore, the present disclosure is intended to describe but not to limit the scope of the concepts discussed in the specification.

## Claims

1. An antenna system (1), wherein the antenna system (1) comprises:
a first antenna array (20), wherein the first antenna array (20) corresponds to a first operating band;
a second antenna array (30), wherein the second antenna array (30) corresponds to a second operating band, and is disposed opposite to the first antenna array (20) in a third direction; and
a frequency selective architecture (10), wherein the frequency selective architecture (10) is located between the first antenna array (20) and the second antenna array (30), and is capable of reflecting an electromagnetic wave of the first operating band and transmitting an electromagnetic wave of the second operating band, wherein
the frequency selective architecture (10) comprises a frequency selective structure (100) and at least one shielding shell (200), wherein the at least one shielding shell (200) is mounted on the frequency selective structure (100) and is connected to the first antenna array (20).

2. The antenna system (1) according to claim 1, wherein the frequency selective structure (100) comprises at least one frequency selective unit distributed in three-dimensional space, the at least one frequency selective unit encloses at least one mounting channel (101), and the shielding shell (200) is located in the mounting channel (101).

3. The antenna system (1) according to claim 2, wherein each frequency selective unit comprises at least two planar patterns that are cross-connected to each other, and a connection manner of the at least two planar patterns comprises at least one of clamping, bonding, and welding.

4. The antenna system (1) according to claim 2 or 3, wherein at least a part of the frequency selective units in the frequency selective structure (100) form a first mesh structure, and a mesh of the first mesh structure serves as the mounting channel (101).

5. The antenna system (1) according to claim 4, wherein there are at least two mounting channels (101), the at least two mounting channels (101) are successively arranged in parallel in a first direction, each mounting channel (101) extends in a second direction, and the first direction, the second direction, and the third direction intersect each other.

6. The antenna system (1) according to claim 5, wherein the first direction, the second direction, and the third direction are perpendicular to each other.

7. The antenna system (1) according to claim 5 or 6, wherein the first mesh structure at least comprises at least two groups of first frequency selective units (110) that are distributed in parallel, each group of first frequency selective units (110) are provided with mounting openings, and positions of the mounting openings on the at least two groups of first frequency selective units (110) are opposite to each other, to jointly form the mounting channel (101).

8. The antenna system (1) according to claim 7, wherein the first mesh structure comprises the at least two groups of first frequency selective units (110) that are distributed in parallel and at least two groups of second frequency selective units (120), each group of first frequency selective units (110) are provided with the mounting openings, the positions of the mounting openings on the at least two groups of first frequency selective units (110) are opposite to each other, to jointly form the mounting channel (101), and each group of second frequency selective units (120) are located between two adjacent shielding shells (200) and are connected to the first frequency selective unit (110).

9. The antenna system (1) according to claim 5 or 6, wherein the first mesh structure comprises at least a third frequency selective unit (130), and the third frequency selective unit (130) comprises:
a third pattern (131), wherein the third pattern (131) is parallel to the first direction and the second direction, and is connected to the shielding shell (200); and
a fourth pattern (132), wherein the fourth pattern (132) is distributed between two adjacent shielding shells (200) and is connected to the third pattern (131).

10. The antenna system (1) according to claim 2 or 3, wherein at least a part of the frequency selective units in the frequency selective structure (100) form a plurality of strip structures arranged in parallel in a first direction, each of the strip structures extends in a second direction, the mounting channel (101) is formed between two adjacent strip structures, and the first direction, the second direction, and the third direction intersect each other.

11. The antenna system (1) according to claim 10, wherein the strip structure comprises at least a fourth frequency selective unit (140), and the fourth frequency selective unit (140) comprises:
a fifth pattern (141) and a sixth pattern (142) arranged in a cross manner on a first distribution plane, wherein the first distribution plane is perpendicular to the third direction;
a seventh pattern (143) and an eighth pattern (144) arranged in a cross manner on a second distribution plane, wherein the second distribution plane is parallel to the first distribution plane; and
a connecting piece (145) whose extension direction is parallel to the third direction, wherein one end of the connecting piece (145) is connected to an intersection position of the fifth pattern (141) and the sixth pattern (142), and the other end is connected to an intersection position of the seventh pattern (143) and the eighth pattern (144).

12. The antenna system (1) according to claim 2 or 3, wherein at least a part of the frequency selective units in the frequency selective structure (100) form a block structure, the shielding shell (200) comprises a second mesh structure, a mesh of the second mesh structure penetrates in the third direction, and the block structure is distributed in the mesh of the second mesh structure.

13. The antenna system (1) according to claim 12, wherein the block structure comprises at least a fifth frequency selective unit (150), and the fifth frequency selective unit (150) comprises:
a ninth pattern (151); and
a tenth pattern (152), wherein the tenth pattern (152) and the ninth pattern (151) are non-coplanar and arranged in a cross manner, and a cross line of the ninth pattern (151) and the tenth pattern (152) is parallel to an extension direction of the mounting channel (101).

14. The antenna system (1) according to claim 12, wherein the block structure comprises at least a sixth frequency selective unit (160), and the sixth frequency selective unit (160) comprises:
an eleventh pattern (161), wherein the eleventh pattern (161) is arranged perpendicular to the third direction; and
a twelfth pattern (162), wherein the twelfth pattern (162) and the eleventh pattern (161) are disposed opposite to each other.

15. The antenna system (1) according to any one of claims 12 to 14, wherein the shielding shell (200) comprises a first shell and a second shell, and the first shell and the second shell are fastened to each other in the third direction, to jointly form an accommodation cavity of the shielding shell (200).

16. The antenna system (1) according to any one of claims 1 to 15, wherein the first antenna array (20) comprises:
a first sub antenna array, wherein the first sub antenna array corresponds to a first operating sub-band, and the first operating sub-band is in the first operating band; and
a second sub antenna array, wherein the second sub antenna array corresponds to a second operating sub-band, the second operating sub-band is in the first operating band, and the second operating sub-band is different from the first operating sub-band.

17. The antenna system (1) according to claim 16, wherein the first sub antenna array comprises a plurality of first antenna elements, distances between two adjacent first antenna elements are the same, and the distance is positively correlated with a wavelength of an electromagnetic wave corresponding to the first operating sub-band.

18. The antenna system (1) according to claim 17, wherein the distance is a half wavelength of the electromagnetic wave corresponding to the first operating sub-band.

19. The antenna system (1) according to any one of claims 1 to 18, wherein
each shielding shell (200) comprises at least two first division cavities, and the at least two first division cavities are arranged in the third direction; and/or
each shielding shell (200) comprises at least two second division cavities, and the at least two second division cavities are arranged in a vertical direction of the third direction.

20. The antenna system (1) according to any one of claims 1 to 19, wherein
there are at least two shielding shells (200), and the first antenna array (20) is arranged on at least one of the at least two shielding shells (200).

21. The antenna system (1) according to any one of claims 1 to 20, wherein the frequency selective structure (100) is connected to the shielding shell (200), and a connection manner between the frequency selective structure (100) and the shielding shell (200) comprises at least one of clamping, bonding, and welding.

22. The antenna system (1) according to any one of claims 1 to 20, wherein the frequency selective structure (100) is not connected to the shielding shell (200).

23. The antenna system (1) according to any one of claims 1 to 22, wherein the antenna system (1) further comprises a reflector plate (40), the reflector plate (40) is located on a side that is of the second antenna array (30) and that faces away from the first antenna array (20), and the second antenna array (30) is arranged on the reflector plate (40).

24. The antenna system (1) according to any one of claims 1 to 23, wherein the antenna system (1) further comprises a physical line (50), and the first antenna array (20) and the shielding shell (200) are connected through the physical line (50).

25. The antenna system (1) according to claim 24, wherein the physical line (50) comprises at least one of a coaxial cable, a signal transmission line, and a printed circuit board microstrip.

26. The antenna system (1) according to any one of claims 1 to 25, wherein the antenna system (1) further comprises a signal transmission network (60), and the signal transmission network (60) is located in the shielding shell (200).

27. The antenna system (1) according to claim 25, wherein the signal transmission network (60) is distributed in at least a part of the accommodation cavity in the shielding shell (200).

28. The antenna system (1) according to claim 25 or 26, wherein the signal transmission network (60) comprises a coaxial cable and/or a phase shifter.

29. The antenna system (1) according to any one of claims 26 to 28, wherein
there are at least two shielding shells (200), and the signal transmission network (60) is arranged in at least one of the at least two shielding shells (200).

30. An antenna system (2), wherein the antenna system (2) comprises:
a first antenna array (20), wherein the first antenna array (20) corresponds to a first operating band; and
a frequency selective architecture (10), wherein the frequency selective architecture (10) is capable of reflecting an electromagnetic wave of the first operating band and transmitting an electromagnetic wave of a second operating band, the second operating band is different from the first operating band, the frequency selective architecture (10) comprises a frequency selective structure (100) and a shielding shell (200), and the shielding shell (200) is mounted on the frequency selective structure (100) and is connected to the first antenna array (20).

31. A base station, wherein the base station comprises the antenna system according to any one of claims 1 to 30 and a radio frequency module, and the antenna system is connected to the radio frequency module.

32. A frequency selective architecture (10), wherein the frequency selective architecture (10) is capable of reflecting an electromagnetic wave of a first operating band and transmitting an electromagnetic wave of a second operating band, the first operating band is different from the second operating band, the frequency selective architecture (10) comprises a frequency selective structure (100) and a shielding shell (200), and the shielding shell (200) is mounted on the frequency selective structure (100).
